# EUROPEAN PATENT APPLICATION

(11) **EP 4 503 191 A1**
(43) Date of publication of application: **05.02.2025**
(21) Application number: 23779369.0
(22) Date of filing: 09.03.2023
(51) Int. Cl.: H01M 4/587, C01B 32/205, H01M 4/36

(54) **CARBON MATERIAL COMPOSITION AND METHOD FOR MANUFACTURING SAME, AND NEGATIVE ELECTRODE AND SECONDARY BATTERY**

(30) Priority: 31.03.2022 JP 2022058822
(71) Applicant: Mitsubishi Chemical Corporation, Tokyo 100-8251 (JP)
(72) Inventor: SEKI, Keiichi, Tokyo 100-8251 (JP); HASEGAWA, Tatsuya, Tokyo 100-8251 (JP); SHITO, Keiji, Tokyo 100-8251 (JP)
(74) Representative: Vossius & Partner Patentanwälte Rechtsanwälte mbB
(86) International application number: PCT/JP2023/008993
(87) International publication number: WO 2023/189342

(57) **Abstract**

An object of the present invention is to provide a carbon material composition that can easily increase a density of a negative electrode plate and can provide a secondary battery that is excellent in all of an initial efficiency, rate characteristics, and remaining capacity retention rate after high-temperature storage, and as a result, to provide a high-performance secondary battery. The present invention relates to a carbon material composition comprising a carbon material (A) and a carbon material (B), wherein the carbon material (A) has a cumulative pore volume of 0.02 mL/g or more in a range of pore diameters of 0.01 µm or more and 1 µm or less, and a ratio of a pore diameter to a volume-based average particle diameter (PD/d50 (%)) expressed by the following formula (1) of 1.8 or less, and the carbon material (B) is an organic compound-coated carbon material. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100

## Description

### Technical Field

The present invention relates to a carbon material composition and production method thereof, and a negative electrode and a secondary battery.

### Background Art

In recent years, as electronic devices have become smaller, demand for high-capacity secondary batteries has increased. In particular, lithium-ion secondary batteries are attracting attention because they have higher energy density and superior high-current charging and discharging characteristics than nickel-cadmium batteries and nickel-hydrogen batteries.

Conventional, increasing the capacity of lithium-ion secondary batteries has been widely studied, but in recent years, there has been an increasing demand for even higher performance in lithium-ion secondary batteries, and there is a demand for even higher capacity, higher input/output, longer life, and other improvements in characteristics.

Patent Literature 1 discloses an anode material for non-aqueous secondary batteries that contains a carbonaceous particle (A) and a silicon oxide particle (B), wherein the carbonaceous particle (A) has a cumulative pore volume of 0.08 mL/g or more in a range of pore diameters of 0.01 µm or more and 1 µm or less, and a ratio of a pore diameter to a volume-based average particle diameter (PD/d50 (%)) expressed by the following formula of 1.8 or less, and a particle size (d10) corresponding to cumulative 10% from the small particle side of the silicon oxide particle (B) is 0.001 µm or more and 6 µm or less, as a negative electrode material for non-aqueous secondary batteries having a high capacity, excellent cycle characteristics, and the like. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100

Patent Literature 2 discloses a carbon material (C) for non-aqueous secondary batteries, which is made by attaching a water-soluble polymer (B) to a carbon material (A) having a surface functional group amount O/C value of 1% or more and 4% or less, as a negative electrode material for non-aqueous secondary batteries having a high capacity and good charge/discharge load characteristics.

### Citation List

### Patent Literature

Patent Literature 1: JP 2018-88406 A
Patent Literature 2: JP 2011-198710 A

### Summary of Invention

### Technical Problem

The negative electrode material disclosed in Patent Literature 1 has high hardness because it does not contain a carbon material equivalent to the carbon material (B) used in the present invention. It is difficult to increase a density a negative electrode plate using this carbon material by pressing. When pressing is performed with an excessive pressure, the negative electrode material particles are destroyed and active new surfaces are created, resulting in poor initial efficiency, rate characteristics, and remaining capacity retention rate after high-temperature storage.

The carbon material disclosed in Patent Literature 2 does not contain a carbon material equivalent to the carbon material (A) used in the present invention, and is therefore easily deformed by pressing. When a negative electrode plate using this carbon material is pressed to increase a density, the negative electrode material particles deform and block an electrolyte flow path inside the electrode plate, resulting in poor initial efficiency, rate characteristics, and remaining capacity retention rate after high-temperature storage.

An object of the present invention is to provide a carbon material composition that can easily increase a density of a negative electrode plate and can provide a secondary battery that is excellent in all of initial efficiency, rate characteristics, and remaining capacity retention rate after high-temperature storage, and as a result, to provide a high-performance secondary battery.

### Solution to Problem

The present inventors have found that the above problem can be solved by a carbon material composition containing a carbon material (A) having a cumulative pore volume in a range of pore diameters of 0.01 µm or more and 1 µm or less of 0.02 mL/g or more and a ratio of a given pore diameter to a volume-based average particle diameter (PD/d50 (%)) of 1.8 or less, and a carbon material (B) that is an organic compound-coated carbon material.

The reason why the carbon material composition of the present invention exhibits the above mentioned effect is considered to be as follows.

The carbon material (A) having a cumulative pore volume in a range of pore diameters of 0.01 µm or more and 1 µm or less of 0.02 mL/g or more and a PD/d50 (%) of 1.8 or less forms a moderately dense intraparticle void structure and has a moderate amount of interparticle voids, so that it has good electrolyte immersion and is inherently excellent in an initial efficiency and rate characteristics. This carbon material (A) is also capable of deforming in response to the expansion of the active material particles in the electrode due to charging, which is thought to have the effect of suppressing the irreversible expansion due to charging and discharging. On the other hand, a negative electrode plate using only carbon material (A) has high hardness, and when pressed with an excessive pressure, the negative electrode material particles are destroyed and active new surfaces are created, as a result an initial efficiency and rate characteristics are impaired.

The carbon material (B), which is an organic compound-coated carbon material, maintains its flexibility due to the organic compound-coating, and by blending it with the carbon material (A), it can flexibly deform during pressing, suppressing a crushing of the carbon material (A). In addition, the organic compound-coating prevents direct contact between an electrolyte and a carbon material, thereby suppressing side reactions of the electrolyte, and can improve an initial efficiency, rate characteristics, and a remaining capacity retention rate after high-temperature storage.

For this reason, the carbon material composition of the present invention, which contains such carbon material (A) and carbon material (B), can be used as a negative electrode material for a secondary battery to easily achieve high density negative electrode plates and to realize secondary batteries that are excellent in all of initial efficiency, rate characteristics, and remaining capacity retention rate after high-temperature storage.

The gist of the present invention is as follows.

[1] A carbon material composition comprising a carbon material (A) and a carbon material (B),
   wherein the carbon material (A) has a cumulative pore volume of 0.02 mL/g or more in a range of pore diameters of 0.01 µm or more and 1 µm or less, and a ratio of a pore diameter to a volume-based average particle diameter (PD/d50 (%)) expressed by the following formula (1) of 1.8 or less, and
   the carbon material (B) is an organic compound-coated carbon material. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100
[2] The carbon material composition according to [1], wherein the circularity of the carbon material (A) measured by a flow type particle image analysis is 0.88 or more.
[3] The carbon material composition according to [1] or [2], wherein the carbon material (A) is derived from natural graphite.
[4] The carbon material composition according to any one of [1] to [3], wherein the carbon material (A) is a composite carbon material of spheroidized graphite and a carbonaceous material.
[5] The carbon material composition according to any one of [1] to [4], wherein the carbon material (B) is derived from natural graphite.
[6] The carbon material composition according to any one of [1] to [5], wherein a basal plane of the carbon material (B) is coated with the organic compound.
[7] The carbon material composition according to any one of [1] to [6], wherein the organic compound is a compound derived from a polyvinyl alcohol resin.
[8] The carbon material composition according to any one of [1] to [7], wherein the carbon material composition contains 20% by mass to 80% by mass of the carbon material (A) and 20% by mass to 80% by mass of the carbon material (B) based on a total of 100% by mass of the carbon material (A) and the carbon material (B).
[9] The carbon material composition according to any one of [1] to [8], having a mass reduction rate of 0.04% by mass to 0.48% by mass from 200°C to 700°C measured by TG-DTA.
[10] A method for producing a carbon material composition comprising a step of mixing a carbon material (A) and a carbon material (B),
   wherein the carbon material (A) has a cumulative pore volume of 0.02 mL/g or more in a range of pore diameters of 0.01 µm or more and 1 µm or less, and a ratio of a pore diameter to a volume-based average particle diameter (PD/d50 (%)) expressed by the following formula (1) of 1.8 or less, and
   the carbon material (B) is an organic compound-coated carbon material. PD/d50 (%) = ([mode pore diameter (PD) in a range of pore diameters of 0.01 µm or more and 1 µm or less in a pore distribution obtained by a mercury intrusion porosimetry] / [volume-based average particle diameter (d50)]) × 100
[11] A negative electrode comprising a current collector and an active material layer formed on the current collector, wherein the active material layer comprises the carbon material composition according to any one of [1] to [9].
[12] A secondary battery comprising a positive electrode, a negative electrode, and an electrolyte, wherein the negative electrode is the negative electrode according to [11].

### Advantageous Effects of Invention

According to the present invention, it is possible to provide a secondary battery that is excellent in all of initial efficiency, rate characteristics, and a remaining capacity retention rate after high-temperature storage.

### Description of Embodiments

Hereinafter, the present invention will be explained in detail. The description of the constituent features of the invention described below is an example (representative example) of the embodiments of the present invention, and the present invention is not limited to these embodiments unless the gist thereof is exceeded.

### [Carbon material composition]

The carbon material composition of the present invention contains a specific carbon material (A) (hereinafter, sometimes referred to as "carbon material (A) of the present invention") and a carbon material (B) (hereinafter, sometimes referred to as "carbon material (B) of the present invention").

The carbon material composition of the present invention may contain only one type of the carbon material (A) of the present invention, or may contain two or more types of carbon materials having different physical properties, raw carbon materials, and the like. Furthermore, the carbon material (B) of the present invention may contain only one type, or may contain two or more types different in organic compounds, physical properties, and the like.

### [Carbon material (A)]

The carbon material (A) of the present invention has a cumulative pore volume in a range of pore diameters of 0.01 µm or more and 1 µm or less of 0.02 mL/g or more, and a ratio of a pore diameter to a volume-based average particle diameter (PD/d50 (%)) expressed by the following formula (1) of 1.8 or less. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100

The carbon material (A) of the present invention is not particularly limited as long as it has a cumulative pore volume in a range of pore diameters of 0.01 µm or more and 1 µm or less of 0.02 mL/g or more, and a PD/d50 (%) of 1.8 or less, but examples thereof include graphite, amorphous carbon, and carbonaceous materials having a low degree of graphitization.

Among these, graphite is preferred because it is commercially readily available, has a high theoretical charge/discharge capacity of 372 mAh/g, and is more effective at improving charge/discharge characteristics at high current density compared to the case of using other negative electrode active materials. Examples of graphite include natural graphite, artificial graphite, and the like, and natural graphite is more preferred due to its high capacity and good charge/discharge characteristics at high current density.

In addition, these may be coated with a carbonaceous material, such as amorphous carbon or a graphitized material.

In the present invention, these may be used alone or in combination of two or more.

Examples of amorphous carbon used in the carbon material (A) of the present invention include particles obtained by calcining bulk mesophase and particles obtained by subjecting a carbon precursor to infusibile treatment and then calcining.

Examples of a carbonaceous material having a low degree of graphitization used in the carbon material (A) of the present invention include particles obtained by calcining an organic substance at a temperature usually below 2500°C. Examples of the organic substance include coal-based heavy oil such as coal tar pitch, carbonized liquefied oil, and the like; straight-run heavy oil such as atmospheric residual oil, vacuum residual oil, and the like; petroleum-based heavy oils such as ethylene tar and other cracked heavy oils that are byproducts of the thermal cracking of crude oil, naphtha, and the like; aromatic hydrocarbons such as acenaphthylene, decacyclene, anthracene, and the like; nitrogen-containing cyclic compounds such as phenazine, acridine, and the like; sulfur-containing cyclic compounds such as thiophene, and the like; aliphatic cyclic compounds such as adamantane, and the like; polyphenylenes such as biphenyl, terphenyl, and the like; polyvinyl esters such as polyvinyl chloride, polyvinyl acetate, polyvinyl butyral, and the like; and thermoplastic polymers such as polyvinyl alcohol, and the like.

Examples of the artificial graphite include those obtained by graphitizing organic substances such as coal tar pitch, coal-based heavy oil, atmospheric residual oil, petroleum-based heavy oil, aromatic hydrocarbons, nitrogen-containing cyclic compounds, sulfur-containing cyclic compounds, polyphenylene, polyvinyl chloride, polyvinyl alcohol, polyacrylonitrile, polyvinyl butyral, natural polymers, polyphenylene sulfide, polyphenylene oxide, furfuryl alcohol resin, phenol-formaldehyde resin, imide resin, and the like by heating at 2500°C or higher.

Examples of the natural graphite include earthy graphite, scale-like graphite, flake-like graphite, and the like. Among these natural graphites, scale-like graphite and flake-like graphite are preferable, and flake-like graphite is more preferable, because they have a high degree of graphitization and a low amount of impurities.

Among natural graphites, spheroidized natural graphite is most preferable from the viewpoints of forming suitable dense pores inside the carbon material and exhibiting excellent particle packing properties and charge/discharge load characteristics.

As the carbon material (A) of the present invention, particles in which the above mentioned artificial graphite or natural graphite is coated with amorphous carbon and/or a carbonaceous material having a low degree of graphitization can also be used. The carbon material (A) may contain oxides and other metals. Examples of another metal include metal that can be alloyed with Li, such as Sn, Si, Al, Bi, and the like.

### <Method for producing Carbon Material (A)>

There are no particular limitations on the method for producing the carbon material (A) of the present invention, so long as it is a method that can produce the carbon material (A) having a cumulative pore volume in a range of pore diameters of 0.01 µm or more and 1 µm or less of 0.02 mL/g or more and a PD/d50 (%) of 1.8 or less. One of the means for achieving this is a method of spheroidization in which a fine powder produced during spheroidization (granulation) of flake-like natural graphite, whose particle size has been adjusted so that the d50 is 80 µm or less, is adhered to a base material that becomes spheroidized graphite (hereinafter, sometimes referred to as "spheroidized graphite"), and/or, is encapsulated in the spheroidized graphite particles.

Specifically, the method includes a granulation step in which the raw carbon material is granulated by applying at least any one of mechanical energy of impact, compression, friction, and shear force, and the granulation step may be carried out in the presence of a granulating agent that satisfies the following conditions 1) and 2).
1) It is a liquid during the step of granulating the raw carbon material.
2) A granulating agent does not contain an organic solvent, or when it contains an organic solvent, at least one of the organic solvents does not have a flash point, or when it has a flash point, the flash point is 5°C or higher.

When the method has the granulation step, it may further have other steps as necessary. The other steps may be carried out alone, or multiple steps may be carried out simultaneously. One embodiment includes the following first to sixth steps.

(First step) A step of adjusting a particle size of the raw carbon material
(Second step) A step of mixing the raw carbon material with a granulating agent
(Third step) A step of granulating the raw carbon material
(Fourth step) A step of removing the granulating agent
(Fifth step) A step of purifying the granulated carbon material
(Sixth step) A step of further adhering a carbonaceous material having a lower crystallinity than the raw carbon material to a granulated carbon material

### (First step) A step of adjusting a particle size of the raw carbon material

The raw carbon material used in the production of the carbon material (A) of the present invention is not particularly limited, and the above mentioned artificial graphite or natural graphite can be used. Among these, it is preferable to use natural graphite because it has high crystallinity and high capacity. Examples of natural graphite include natural graphite in the form of scale, flake, block or plate. Among these, flake-like graphite is preferable.

The volume-based average particle diameter d50 (hereinafter sometimes simply referred to as "d50") of the raw carbon material obtained in the first step is preferably 1 µm or more, more preferably 2 µm or more, and even more preferably 3 µm or more, and is preferably 80 µm or less, more preferably 50 µm or less, even more preferably 35 µm or less, particularly preferably 20 µm or less, especially preferably 10 µm or less, and most preferably 8 µm or less.

When the d50 is within the above range, it is possible to prevent an increase in irreversible capacity and a decrease in cycle characteristics. In addition, the intraparticle void structure of the spheroidized graphite can be precisely controlled, and it is easy to make the PD/d50 (%) 1.8 or less. Therefore, the electrolyte can efficiently permeate the interparticle voids, and the Li ion insertion and extraction sites in the particles can be efficiently utilized, which tends to improve low-temperature output characteristics and cycle characteristics. Furthermore, the circularity of the spheroidized graphite can be adjusted to a high level, which enables smooth movement of the electrolyte in the voids between the particles without increasing the degree of bending of the Li ion diffusion, thereby improving the rapid charge/discharge characteristics.

When the d50 is within the above range, it becomes possible to granulate the fine powder generated during the granulation step while adhering it to or encapsulating it inside the base material that becomes the granulated graphite (hereinafter referred to as "granulated carbon material"), and a granulated carbon material having a high degree of sphericity and little fine powder can be obtained.

In this specification, the volume-based average particle diameter d50 refers to the volume-based median diameter measured by a laser diffraction/scattering particle size distribution analyzer.

Specifically, 0.01 g of a sample is suspended in 10 mL of a 0.2% by mass aqueous solution of polyoxyethylene sorbitan monolaurate which is a surfactant, and the suspension is introduced into a laser diffraction/scattering particle size distribution analyzer. After irradiating with 28 kHz ultrasonic waves at an output of 60 W for 1 minute, the volume-based median diameter in the analyzer is measured.

Examples of the method for adjusting the d50 of the raw carbon material to the above range include a method of crushing and/or classifying (natural) graphite particles.

The aspect ratio of the raw carbon material is preferably 3 or more, more preferably 5 or more, even more preferably 10 or more, and particularly preferably 15 or more, and is preferably 1000 or less, more preferably 500 or less, even more preferably 100 or less, and particularly preferably 50 or less.

When the aspect ratio is equal to or more than the lower limit, it is easy to form strong granules. When the aspect ratio is equal to or less than the upper limit, it is easy to form particles having an appropriate particle size.

In this specification, the aspect ratio is calculated as A/B using the longest diameter A of the particle when observed three-dimensionally using a scanning electron microscope and the shortest diameter B of the diameters perpendicular to a direction of the longest diameter A. The value of the aspect ratio is the average value of the aspect ratios of any 50 particles.

The d002 value of the raw carbon material is preferably 3.357 Å or less, more preferably 3.356 Å or less, and even more preferably 3.354 Å or less, because graphite is highly crystalline and has sufficient charge/discharge capacity.

The Lc of the raw carbon material is preferably 900 Å or more, and more preferably 1000 Å or more, because graphite is highly crystalline and has sufficient charge/discharge capacity.

In this specification, the d002 value is a value of an interplanar spacing of lattice planes (002 planes) measured by X-ray diffractometry in accordance with the method of the Japan Society for the Promotion of Science, and the Lc is a value of a crystallite size measured by X-ray diffractometry in accordance with the method of the Japan Society for the Promotion of Science. The measurement conditions for X-ray diffraction are as follows.
Sample: a mixture of a measurement target and approximately 15% by mass of X-ray standard high purity silicon powder based on a total amount of the sample
X-ray: CuKα ray
Measurement range: 20°≦2θ≦30°
Step angle: 0.013°
Sample preparation: fill a recess on a sample plate having a depth of 0.2 mm with powder sample to create a flat sample surface.

The packing structure of the raw carbon material depends on the size, shape, degree of interaction between particles, and the like, but in this specification, a tap density can be used as one of the indices to quantitatively discuss the packing structure. The present inventors' research has confirmed that, when graphite particles have nearly equal true density and volume-based average particle diameter, the more spherical the shape and the smoother the particle surface, the higher the tap density. That is, in order to increase the tap density, it is important to make the particle shape rounder and closer to a sphere, and to maintain smoothness by removing any splinters or defects on the particle surface. When the particle shape is closer to a sphere and the particle surface is smooth, the powder packing property is also greatly improved.

The tap density of the raw carbon material is preferably 0.1 g/cm³ or more, more preferably 0.15 g/cm³ or more, even more preferably 0.2 g/cm³ or more, and particularly preferably 0.3 g/cm³ or more.

In the present invention, the tap density is defined as the density determined using a powder density measuring device by dropping a sample into a cylindrical tap cell having a diameter of 1.6cm and a volume of 20cm³ through a sieve having an opening of 300µm to fully fill the cell with the sample, then tapping the cell 1000 times with a stroke length of 10mm, and calculating the density of the sample from the volume and mass of the sample.

The Raman R value of the raw carbon material is usually 0.1 or more, preferably 0.15 or more, and more preferably 0.2 or more, and is usually 0.6 or less, preferably 0.5 or less, and more preferably 0.4 or less.

When the Raman R value is equal to or more than the lower limit, the crystallinity of the particle surface is less likely to be high, and when the density is increased, the crystals are less likely to be oriented parallel to the negative electrode plate, which tends to avoid a decrease in load characteristics. When the Raman R value is equal to or less than the upper limit, the crystallinity of the particle surface is less likely to be disturbed, which tends to suppress reactivity with an electrolyte and avoid a decrease in charge/discharge efficiency and an increase in gas generation.

In this specification, the Raman R value is defined as the intensity ratio (I_{B}/I_{A}) calculated by measuring the intensity I_{A} of the peak P_{A} that occurs around 1580cm⁻¹ and the intensity I_{B} of the peak P_{B} that occurs around 1360cm⁻¹ in a Raman spectrum obtained by Raman spectroscopy.

In this specification, the expression "around 1580cm⁻¹" refers to a range of 1580 to 1620cm⁻¹, and the expression "around 1360cm⁻¹" refers to a range of 1350 to 1370cm⁻¹.

A Raman spectrum can be measured with a Raman spectrometer. Specifically, the sample that is to be measured is dropped into a measurement cell by gravity in order to charge the sample into the cell. The measurement is conducted while the inside of the measurement cell is irradiated with an argon ion laser beam and the measurement cell is rotated in a plane perpendicular to the laser beam. The measurement conditions are as follows.
Argon ion laser light wavelength: 514.5nm
Laser power on sample: 25mW
Resolution: 4cm⁻¹
Measurement range: 1100cm⁻¹ to 1730cm⁻¹
Peak intensity measurement, peak half-width measurement: background processing, smoothing processing (5 points of convolution using simple average)

The specific surface area (SA) of the raw carbon material is preferably 0.3 m²/g or more, more preferably 0.5 m²/g or more, even more preferably 1 m²/g or more, particularly preferably 2 m²/g or more, and most preferably 5 m²/g or more, and is preferably 30 m²/g or less, more preferably 20 m²/g or less, and even more preferably 15 m²/g or less.

When the specific surface area is within the above range, the acceptability of Li ion is good, and it is possible to prevent a decrease in battery capacity due to an increase in irreversible capacity.

In this specification, the specific surface area (SA) is a value measured by a BET method.

Specifically, using a specific surface area measuring device, a sample is subjected to preliminary reduced pressure drying at 100°C for 30 minutes under a nitrogen flow, then cooled to liquid nitrogen temperature, and a nitrogen gas is used to measure by a BET one-point method.

The surface functional group amount O/C value of the raw carbon material is preferably 0.01% or more, more preferably 0.1% or more, even more preferably 0.3% or more, and particularly preferably 0.5% or more, and is preferably 5% or less, more preferably 3% or less, even more preferably 2.5% or less, particularly preferably 2% or less, and most preferably 1.5% or less.

When the surface functional group amount O/C value is within the above range, a hygroscopicity is suppressed, the particles tend to be easily kept in a drystate, and an electrostatic attraction between the particles is increased during the spheroidization treatment. This is preferable because it increases an adhesive force between the particles and makes it easier for the fine powder to adhere to the base material and be encapsulated in the spheroidized particles.

In this specification, the surface functional group amount O/C value is a value measured using X-ray photoelectron spectroscopy (XPS).

Specifically, the measurement is performed using an X-ray photoelectron spectrometer as follows. The measurement target is placed on a sample stage so that the surface is flat. The aluminum Kα ray is used as the X-ray source, and the C1s (280 to 300 eV) and O1s (525 to 545 eV) spectra are measured by multiplex measurement. The peak top of the obtained C1s is set to 284.3 eV for charge correction. The peak areas of the C1s and O1s spectra are then obtained. Each surface atomic concentrations of C and O are calculated by multiplying the obtained peak areas by the instrument sensitivity coefficient. The percentage of the obtained O/C atomic concentration ratio (O atomic concentration/C atomic concentration) of O and C is taken as the surface functional group amount O/C value (%).

### (Second step) A step of mixing the raw carbon material with a granulating agent

The granulating agent used in the embodiment of the present invention satisfies the following conditions 1) and 2).
1) It is a liquid during the step of granulating the raw carbon material.
2) A granulating agent does not contain an organic solvent, or when it contains an organic solvent, at least one of the organic solvents does not have a flash point, or when it has a flash point, the flash point is 5°C or higher.

By using a granulating agent that satisfies the above requirements, the granulating agent can form a liquid bridge between the raw carbon materials in the subsequent third step of granulating the raw carbon materials, and the attractive force generated between the raw carbon materials by the capillary negative pressure in the liquid bridge and the surface tension of the liquid acts as a liquid bridge adhesive force between the particles. This increases the liquid bridge adhesive force between the raw carbon materials, allowing the raw carbon materials to adhere more firmly.

The granulating agent is preferably one that can be efficiently removed in the step of removing the granulating agent (forth step) described later and does not adversely affect battery characteristics such as capacity, output characteristics, storage and cycle characteristics. Specifically, the granulating agent can be appropriately selected from materials that decrease mass thereof by usually 50% or more, preferably 80% or more, more preferably 95% or more, even more preferably 99% or more, and particularly preferably 99.9% or more when heated to 700°C in an inert atmosphere.

Examples of the method for mixing the raw carbon material and granulating agent include a method of mixing the raw carbon material and granulating agent using a mixer or kneader, a method of mixing the granulating agent made by dissolving an organic compound in a low-viscosity diluting solvent (organic solvent) and the raw carbon material and removing the diluting solvent (organic solvent) after the mixing, and the like. In addition, examples of the method also include a method in which the granulating agent and raw carbon material are charged into a granulating device, and the step of mixing the raw carbon material and granulating agent and the step of granulating are performed at the same time when granulating the raw carbon material in the subsequent third step.

The amount of the granulating agent added is preferably 0.1 parts by mass or more, more preferably 1 part by mass or more, even more preferably 5 parts by mass or more, and particularly preferably 10 parts by mass or more, based on 100 parts by mass of the raw carbon material. It is preferably 1000 parts by mass or less, more preferably 100 parts by mass or less, even more preferably 80 parts by mass or less, and particularly preferably 50 parts by mass or less. When the amount of the granulating agent is within the above range, problems such as a decrease in sphericity due to a decrease in adhesive force between the particles and a decrease in productivity due to the raw carbon material adhering to the equipment are less likely to occur.

### (Third step) A step of granulating the raw carbon material (step of subjecting the raw carbon material to a spheroidizing treatment)

The carbon material is preferably one which has been subjected to a spheroidizing treatment (hereinafter also referred to as granulation) by applying mechanical effects such as impact compression, friction, shear force, and the like, to the raw carbon material. In addition, the spheroidized graphite is preferably made of a plurality of flake-like or scale-like graphite and ground graphite fine powder, and is particularly preferably made of a plurality of flake-like graphite.

The embodiment of the present invention preferably has a granulation step of granulating the raw carbon material by applying mechanical energy of at least any one of impact, compression, friction, and shear force.

Examples of an apparatus for use in this step include an apparatus which repeatedly applies mechanical action such as compression, friction, shear force, and the like, including the interaction of the raw carbon material, mainly impact force.

Specifically, it is preferable that the apparatus includes a rotor provided with a number of blades disposed inside a casing thereof and applies a mechanical action, such as an impact, compressive, frictional, shear force, or the like, to the raw carbon material introduced into the inside thereof by rotating the rotor at a high speed. The apparatus preferably has a mechanism that causes the raw carbon material to circulate and allows the mechanical action to be repeatedly applied to the carbon material.

In the step of granulating the raw carbon material, the raw carbon material may be granulated in the presence of other substances. Examples of the other substance include metals that can be alloyed with lithium or oxides thereof, flake-like graphite, scale-like graphite, ground graphite fine powder, amorphous carbon, raw coke, and the like. The carbon material (A) having various types of particle structures can be produced by granulating the raw carbon material together with substances other than the raw carbon material.

In the spheroidization treatment of the carbon material, it is more preferable to perform the spheroidization while the fine powder generated during the spheroidization is adhered to the base material and/or while the fine powder is encapsulated in the spheroidized particles. By performing the spheroidization while the fine powder generated during the spheroidization is adhered to the base material and/or while the fine powder is encapsulated in the spheroidized particles, it is possible to make the intraparticle void structure more dense. Therefore, the electrolyte effectively and efficiently spreads into the interparticle voids, and the Li ion insertion and extraction sites in the particles can be efficiently utilized. Therefore, there is a tendency to show good low-temperature output characteristics and cycle characteristics. The fine powder to be adhered to the base material is not limited to that generated during the spheroidization treatment, and may be that adjusted to contain a fine powder at the same time as adjusting the particle size of the flake-like graphite, or alternatively, they may be added or mixed at an appropriate timing.

In order to adhere the fine powder to the base material and encapsulate it in the spheroidized particles, it is preferable to strengthen the adhesive forces between flake-like graphite particles and flake-like graphite particles, between flake-like graphite particles and fine powder particles, and between fine powder particles and fine powder particles. Specific examples of adhesive forces between particles include a van der Waals force and an electrostatic attraction force that do not involve inclusions between particles, and physical and/or chemical bridging forces that involve inclusions between particles.

The van der Waals force becomes "self-weight < adhesive force" as the volume-based average particle diameter (d50) becomes smaller with the boundary of 100 µm. Therefore, the smaller the volume-based average particle diameter (d50) of the flake-like graphite (raw carbon material) that is the raw material for the spheroidized graphite, the stronger the adhesive force between the particles becomes, and the more likely it is that the fine powder will adhere to the base material and be encapsulated in the spheroidized particles, which is preferable.

### (Fourth step) A step of removing the granulating agent

In an embodiment of the present invention, a step of removing the granulating agent may be included. Examples of the method for removing the granulating agent include a method of washing and removing the granulating agent with a solvent, and a method of removing the granulating agent by volatilizing or decomposing it through heat treatment.

The granulated carbon material from which the granulating agent has been removed may be subjected to isotropic pressure treatment.

By isotropically pressing the granulated carbon material, the internal voids of the granulated carbon material are compressed. As a result, the density of the granulated carbon material crushed after the pressure treatment is increased, and high-speed charging characteristics can be improved. In addition, isotropic pressure treatment makes it difficult for the particles to become flattened, allowing the particles to maintain their spherical shape, and also prevents a decrease in fluidity when made into a slurry.

Examples of the pressurizing means that can be used include a roll compactor, a roll press, a pricket machine, a cold isostatic pressurizing device (CIP), a uniaxial molding machine, a tablet machine, and the like. Among these pressurizing means, a cold isostatic pressurizing device is preferable because it can reduce internal pores while maintaining the particle shape.

### (Fifth step) A step of purifying the granulated carbon material

In the present invention, a step of purifying the granulated carbon material may be included. Examples of a method for purifying the granulated carbon material include a method of performing an acid treatment using nitric acid or hydrochloric acid. The acid treatment using nitric acid or hydrochloric acid is preferable because it can remove impurities such as metals, metal compounds, inorganic compounds, and the like in the graphite without introducing sulfates into the system, which can be highly active sulfur sources.

### (Sixth step) A step of further adhering a carbonaceous material having a lower crystallinity than the raw carbon material to the granulated carbon material

In an embodiment of the present invention, a step of further adhering a carbonaceous material having a lower crystallinity than the raw carbon material to the granulated carbon material may be included. That is, the carbonaceous material can be composited to the carbon material. This step makes it possible to obtain the carbon material (A) that can suppress side reactions with an electrolyte and improve rapid charge/discharge properties.

The granulated carbon material to which a carbonaceous material having a lower crystallinity than the raw carbon material is adhered is sometimes called a "carbonaceous material composite carbon material" or "composite carbon material".

The treatment of adhering (compositing) the carbonaceous material to the granulated carbon material is a treatment in which an organic compound that will become the carbonaceous material is mixed with the granulated carbonaceous material, and the mixture is heated in a non-oxidizing atmosphere, preferably in a flow of nitrogen, argon, carbon dioxide, or the like, to carbonize or graphitize the organic compound.

Specific examples of organic compounds that can be used as carbonaceous materials include various compounds such as heavy carbonaceous oils such as various soft or hard coal tar pitches, coal liquefied oil, and the like, petroleum-based heavy oils such as residual oil from atmospheric or reduced pressure distillation of crude oil, and the like, cracked heavy oils that are by-products of ethylene production by naphtha cracking, and the like.

The heating temperature (calcination temperature) varies depending on the organic compound used to prepare the mixture, but is usually heated to 800°C or higher, preferably 900°C or higher, and more preferably 950°C or higher to sufficiently carbonize or graphitize the organic compound. The upper limit of the heating temperature is the temperature at which the carbide of the organic compound does not reach a crystal structure equivalent to that of the flake-like graphite in the mixture, and is usually 3500°C or lower. The upper limit of the heating temperature is 3000°C, preferably 2000°C, and more preferably 1500°C or lower.

After carrying out the above mentioned treatment, the carbonaceous material composite carbon material can be obtained by performing a crushing and/or pulverization treatment.

As long as the effect of this embodiment is not impaired, other step or control conditions not described above may be added.

The content of the carbonaceous material in the carbonaceous material composite carbon material is usually 0.01% by mass or more, preferably 0.1% by mass or more, more preferably 0.3% by mass or more, even more preferably 0.7% by mass or more, particularly preferably 1% by mass or more, and most preferably 1.5% by mass or more, based on the granulated carbon material used as the raw material. The content is usually 30% by mass or less, preferably 20% by mass or less, more preferably 15% by mass or less, and particularly preferably 10% by mass or less.

When the content of the carbonaceous material in the carbonaceous material composite carbon material is equal to or more than the lower limit, the effect of the coating, such as an improvement in initial efficiency and an increase in remaining capacity during high-temperature storage, tends to be easily obtained. When the content of the carbonaceous material in the carbonaceous material composite carbon material is equal to or less than the upper limit, a decrease of capacity can be suppressed, and when a press treatment is performed with sufficient pressure to achieve high capacity in a non-aqueous secondary battery, the material destruction of the carbon material can be suppressed, and there is a tendency that an increase in irreversible charge/discharge capacity during the initial cycle and a decrease in initial efficiency can be suppressed.

The content of the carbonaceous material in the carbonaceous material composite carbon material can be calculated from the masses of the samples before and after calcining of the material, using the following formula (2). At this time, the calculation is performed assuming that there is no change in mass of the granulated carbon material before and after calcining. content of carbonaceous material (% by mass) = [(w2-w1)/w1] × 100 (w1 is the mass (kg) of the granulated carbon material, and w2 is the mass (kg) of the carbonaceous material composite carbon material)

In addition, a carbon material different from the granulated carbon material can be mixed with the granulated carbon material in order to improve an orientation of an electrode plate, a permeability of an electrolyte, an electrical conductivity, and the like, and to improve cycle characteristics, swelling of an electrode plate, and the like.

### <Preferred embodiment of carbon material (A)>

The carbon material (A) of the present invention is preferably a composite carbon material of spheroidized graphite, particularly spheroidized graphite derived from natural graphite, and a carbonaceous material (amorphous carbon), from the viewpoints of suppressing side reactions with an electrolyte and improving rapid charge/discharge properties.

The mass ratio of spheroidized graphite to amorphous carbon in this composite carbon material is preferably spheroidized graphite:amorphous carbon=100:0.1 to 20, and particularly 100:1.5 to 10. When the mass ratio of amorphous carbon to spheroidized graphite is equal to or more than the lower limit of the above range, side reactions with an electrolyte are reduced. When this mass ratio is equal to or less than the upper limit, a crushing during press treatment is suppressed, and a decrease in initial efficiency and remaining capacity retention rate during high-temperature storage can be suppressed.

### <Physical properties of carbon material (A)>

The mode pore diameter (PD) in the range of pore diameters of 0.01 µm or more and 1 µm or less of the carbon material (A) of the present invention is preferably 0.01 µm or more, more preferably 0.03 µm or more, even more preferably 0.05 µm or more, particularly preferably 0.06 µm or more, and most preferably 0.07 µm or more, and is preferably 1 µm or less, more preferably 0.65 µm or less, even more preferably 0.5 µm or less, still more preferably 0.4 µm or less, particularly preferably 0.3 µm or less, and most preferably 0.2 µm or less.

When the mode pore diameter (PD) in the range of pore diameters of 0.01 µm or more and 1 µm or less is in the above range, an electrolyte can be efficiently spread into the voids in the particles, the Li ion insertion and extraction sites in the particles can be efficiently utilized, and low-temperature output characteristics and cycle characteristics tend to be improved.

The cumulative pore volume in a range of pore diameters of 0.01 µm or more and 1 µm or less of the carbon material (A) of the present invention is preferably 0.02 mL/g or more, and more preferably 0.03 mL/g or more, and is preferably 0.30 mL/g or less, more preferably 0.25 mL/g or less, even more preferably 0.20 mL/g or less, and particularly preferably 0.18 mL/g or less.

When the cumulative pore volume in the range of pore diameters of 0.01 µm or more and 1 µm or less is within the above range, an electrolyte can be smoothly and efficiently spread inside the particles. Therefore, it becomes possible to effectively and efficiently utilize the Li ion insertion and extraction sites present not only on the outer periphery of the particles but also inside the particles during charging and discharging, and good low-temperature output characteristics tend to be exhibited.

The total pore volume of the carbon material (A) of the present invention is preferably 0.1 mL/g or more, more preferably 0.3 mL/g or more, and even more preferably 0.5 mL/g or more, and is preferably 10 mL/g or less, more preferably 5 mL/g or less, even more preferably 2 mL/g or less, and particularly preferably 1 mL/g or less.

When the total pore volume is within the above range, there is no need to use an excessive amount of binder when forming an electrode plate, i.e., when producing a negative electrode plate, and a dispersion effect of a thickener and binder is easily obtained.

The average pore diameter of the carbon material (A) of the present invention is preferably 0.1 µm or more, more preferably 0.5 µm or more, even more preferably 1.0 µm or more, and particularly preferably 2.0 µm or more, and is preferably 80 µm or less, more preferably 50 µm or less, and even more preferably 20 µm or less.

When the average pore diameter is within the above range, there is no need to use an excessive amount of binder when forming an electrode plate, and there is a tendency that a decrease in high-current density charge/discharge characteristics of a battery can be avoided.

In this specification, the mode pore diameter (PD) in the range of pore diameters of 0.01 µm or more and 1 µm or less, the cumulative pore volume in the range of pore diameters of 0.01 µm or more and 1 µm or less, the total pore volume, and the average pore diameter are values measured by a mercury porosimeter according to a mercury intrusion method.

Specifically, using a mercury porosimeter, the carbon material is weighed to a value of about 0.2 g, sealed in a powder cell, and degassed for 10 minutes at 25°C and 50 µmHg or less to perform pretreatment. Next, the pressure is reduced to 4 psia, mercury is introduced into the cell, and the pressure is increased in steps from 4 psia to 40,000 psia, and then reduced to 25 psia. The number of steps during pressure increasing is set to 80 or more, and each step is allowed to equilibrate for 10 seconds, then the amount of mercury intrusion is measured. The pore distribution is calculated from the mercury intrusion curve thus obtained using Washburn equation. This calculation is performed assuming that the surface tension (γ) of mercury is 485 dyne/cm, and the contact angle (ψ) is 140°. From the obtained pore distribution, the mode pore diameter (PD) in the range of pore diameters of 0.01 µm or more and 1 µm or less, the cumulative pore volume in the range of pore diameters of 0.01 µm or more and 1 µm or less, the total pore volume, and the average pore diameter are calculated.

The volume-based average particle diameter d50 of the carbon material (A) of the present invention is preferably 3 µm or more, more preferably 4 µm or more, even more preferably 5 µm or more, particularly preferably 8 µm or more, especially preferably 10 µm or more, and most preferably 12 µm or more, and is preferably 30 µm or less, more preferably 25 µm or less, even more preferably 23 µm or less, still more preferably 20 µm or less, and particularly preferably 17 µm or less.

When the d50 is equal to or more than the lower limit, there is a tendency to suppress an increase in irreversible capacity and a loss of initial battery capacity of a non-aqueous secondary battery obtained using the carbon material (A). When the d50 is equal to or less than the upper limit, there is a tendency to suppress an occurrence of process inconveniences such as streaking, and the like when applying a slurry, a decrease in high-current density charge/discharge characteristics, and a decrease in low-temperature output characteristics.

The d10 of the carbon material (A) of the present invention is preferably 20 µm or less, more preferably 17 µm or less, even more preferably 15 µm or less, and particularly preferably 13 µm or less, and is preferably 1 µm or more, more preferably 3 µm or more, and even more preferably 5 µm or more.

When the d10 is within the above range, a tendency of particles to aggregate is not too strong, and an occurrence of process inconveniences such as an increase in slurry viscosity, and the like, a decrease in electrode strength in non-aqueous secondary batteries, and a decrease in initial charge/discharge efficiency can be avoided. In addition, a decrease in low-temperature output characteristics due to a decrease in high-current density charge/discharge characteristics tends to be avoided.

In this specification, the d10 is defined as the value at which the frequency percentage of particles reaches 10% cumulatively from the smallest particle size in the particle size distribution obtained by measuring the volume-based average particle diameter d50.

The d90 of the carbon material (A) of the present invention is preferably 100 µm or less, more preferably 70 µm or less, even more preferably 60 µm or less, still more preferably 50 µm or less, particularly preferably 45 µm or less, and most preferably 42 µm or less, and is preferably 10 µm or more, more preferably 15 µm or more, even more preferably 17 µm or more, and particularly preferably 20 µm or more.

When the d90 is within the above range, it is possible to avoid a decrease in electrode strength and a decrease in initial charge/discharge efficiency in non-aqueous secondary batteries, and it also tends to be possible to avoid an occurrence of process inconveniences such as streaking, and the like when applying a slurry, a decrease in high-current density charge/discharge characteristics, and a decrease in low-temperature output characteristics.

In this specification, the d90 is defined as the value at which the frequency percentage of particles reaches 90% cumulatively from the smallest particle size in the particle size distribution obtained by measuring the volume-based average particle diameter d50.

The dmax of the carbon material (A) of the present invention is preferably 200 µm or less, more preferably 150 µm or less, even more preferably 120 µm or less, particularly preferably 100 µm or less, and most preferably 80 µm or less.

When the dmax is within the above range, it tends to be possible to avoid an occurrence of process inconveniences such as streaking, and the like.

In this specification, the dmax is the maximum particle size value measured for particles in the particle size distribution obtained by measuring the volume-based average particle diameter d50.

The PD/d50 (%) of the carbon material (A) of the present invention is expressed by the following formula (1) and is 1.8 or less, preferably 1.7 or less, more preferably 1.5 or less, even more preferably 1.4 or less, particularly preferably 1.3 or less, and most preferably 1.2 or less, and is preferably 0.01 or more, more preferably 0.1 or more, and even more preferably 0.2 or more. PD/d50(%) = ([mode pore diameter (PD) in the range of pore diameters of 0.01 µm or more and 1 µm or less in the pore distribution obtained by a mercury intrusion porosimetry]/[volume-based average particle diameter (d50)]) × 100

When the PD/d50(%) is within the above range, an electrolyte can be efficiently spread into intraparticle voids, and the Li ion insertion and extraction sites in the particles can be efficiently utilized. Therefore, low-temperature output characteristics and cycle characteristics tend to be improved.

The particle number frequency having a particle diameter of 3 µm or less of the carbon material (A) of the present invention is preferably 1% or more, and more preferably 10% or more, and is preferably 60% or less, more preferably 55% or less, even more preferably 50% or less, particularly preferably 40% or less, and most preferably 30% or less.

When the particle number frequency is within the above range, a particle collapse and fine powder peeling are less likely to occur during slurry kneading, electrode rolling, charge and discharge, and the like. Therefore, low-temperature output characteristics and cycle characteristics tend to be good.

In this specification, the particle number frequency having a particle diameter of 3 µm or less is a value measured using a flow type particle image analyzer.

Specifically, 0.2 g of a sample is suspended in 50 mL of a 0.2% by mass aqueous solution of polyoxyethylene sorbitan monolaurate, a surfactant, and introduced into a flow type particle image analyzer. After irradiating with 28 kHz ultrasonic waves at an output of 60 W for 5 minutes, the detection range is specified as 0.6 to 400 µm and the particle number is measured to determine the particle number frequency having a particle diameter of 3 µm or less.

The circularity of the carbon material (A) of the present invention is usually 0.88 or more, preferably 0.90 or more, more preferably 0.91 or more, and is preferably 1 or less, more preferably 0.98 or less, and even more preferably 0.97 or less. When particles have a circularity of 1, the particles are theoretically perfect spherical.

When the circularity is within the above range, the degree of tortuosity of the Li ion diffusion is reduced, the movement of the electrolyte in the interparticle voids becomes smooth, and the carbon materials can come into contact with each other appropriately. As a result, good rapid charge/discharge characteristics and cycle characteristics tend to be exhibited.

In this specification, the circularity is determined by measuring the particle size distribution in terms of equivalent circle diameter in accordance with a flow type particle image analysis and calculating using the following formula (3).

Specifically, ion-exchanged water is used as a dispersion medium and polyoxyethylene sorbitan monolaurate is used as the surfactant, and a dispersion is obtained by dispersing with ultrasonic waves. Then, the shape of the particles is photographed using a flow type image analyzer. From images of at least 1,000 particles, the circularity of particles having an equivalent circle diameter in the range of 1.5 µm to 40 µm is averaged to obtain the circularity. [circularity] = [perimeter of equivalent circle having same area as projected shape of particle]/ [actual perimeter of projected shape of particle]

The tap density of the carbon material (A) of the present invention is usually 0.7 g/cm³ or more, preferably 0.75 g/cm³ or more, more preferably 0.8 g/cm³ or more, even more preferably 0.83 g/cm³ or more, still more preferably 0.85 g/cm³ or more, particularly preferably 0.88 g/cm³ or more, even more particularly preferably 0.9 g/cm³ or more, and most preferably 0.95 g/cm³ or more, and is preferably 1.3 g/cm³ or less, more preferably 1.25 g/cm³ or less, and even more preferably 1.2 g/cm³ or less.

When the tap density is within the above range, defects such as streaking and the like during the preparation of an electrode plate are reduced, and high-speed charge/discharge characteristics are excellent. In addition, since the carbon density in the electrode plate is less likely to increase, a rolling property is also good, and it tends to be easy to form a high-density negative electrode sheet.

The d002 value of the carbon material (A) of the present invention is preferably 3.357 Å or less, more preferably 3.356 Å or less, and even more preferably 3.354 Å or less, because the graphite is highly crystalline and has sufficient charge/discharge capacity.

The Lc of the carbon material (A) of the present invention is preferably 900 Å or more, and more preferably 1000 Å or more, because the graphite is highly crystalline and has sufficient charge/discharge capacity.

The ash content of the carbon material (A) of the present invention is preferably 0.0001% by mass or more, and preferably 1% by mass or less, more preferably 0.5% by mass or less, and even more preferably 0.1% by mass or less, based on 100% by mass of the carbon material (A).

When the ash content is within the above range, when a secondary battery is formed, the deterioration of battery performance due to the reaction between the carbon material composition of the present invention containing the carbon material (A) as the negative electrode material and the electrolyte during charging and discharging can be suppressed to a negligible level. In addition, since the production of the negative electrode material does not require a large amount of time and energy, and does not require facilities for preventing contamination, an increase in costs can be suppressed.

The specific surface area (SA) of the carbon material (A) of the present invention is preferably 0.5 m²/g or more, more preferably 0.8 m²/g or more, and even more preferably 1 m²/g or more, and is preferably 30 m²/g or less, more preferably 25 m²/g or less, even more preferably 20 m²/g or less, particularly preferably 18 m²/g or less, especially preferably 17 m²/g or less, and most preferably 15 m²/g or less.

When the specific surface area is within the above range, it is possible to secure sufficient sites for Li to enter and exit. Therefore, high-speed charge/discharge characteristics and output characteristics are excellent, and the activity of the active material against the electrolyte can be appropriately suppressed. Therefore, there is a tendency that it is possible to manufacture a high-capacity battery in which the initial irreversible capacity is not large and gas generation is suppressed.

The surface functional group amount O/C value of the carbon material (A) of the present invention is preferably 0.01% or more, more preferably 0.1% or more, even more preferably 0.2% or more, still more preferably 1% or more, particularly preferably 1.5% or more, and most preferably 2% or more, and is preferably 8% or less, more preferably 4% or less, even more preferably 3.5% or less, particularly preferably 3% or less, and most preferably 2.5% or less.

When the surface functional group amount O/C value is within the above range, a desolvation reactivity of Li ion and an electrolyte solvent on a surface of a negative electrode active material is promoted, and rapid charge/discharge characteristics become good. As a result, the reactivity with the electrolyte is suppressed, and the charge/discharge efficiency tends to be good.

The true density of the carbon material (A) of the present invention is preferably 1.9 g/cm³ or more, more preferably 2 g/cm³ or more, even more preferably 2.1 g/cm³ or more, and particularly preferably 2.2 g/cm³ or more. The upper limit of the true density is 2.26 g/cm³, which is the theoretical value for graphite.

When the true density is within the above range, the crystallinity of the carbon is not too low, and when a secondary battery is formed, an increase in initial irreversible capacity of the secondary battery can be suppressed.

In this specification, the true density is a value measured in accordance with a liquid phase displacement method (pycnometer method) using butanol. The true density is measured five times, and the average value is used.

The aspect ratio of the carbon material (A) of the present invention is preferably 1.1 or more, and more preferably 1.2 or more, and is preferably 10 or less, more preferably 8 or less, and even more preferably 5 or less.

When the aspect ratio is within the above range, a streaking of a slurry containing the carbon material composition of the present invention including the carbon material (A) is less likely to occur when forming an electrode plate, and a uniform coating surface can be obtained. As a result, there is a tendency to avoid a decrease in high-current density charge/discharge characteristics of a secondary battery.

The Raman R value of the carbon material (A) of the present invention is preferably 0.01 or more, more preferably 0.05 or more, even more preferably 0.1 or more, and particularly preferably 0.2 or more, and is preferably 1 or less, more preferably 0.8 or less, even more preferably 0.6 or less, and particularly preferably 0.5 or less.

When the Raman R value is within the above range, a crystallinity of a surface of the carbon material (A) is less likely to be high, and when a density is increased, the crystals are less likely to be oriented parallel to a negative electrode plate, which tends to avoid a decrease in load characteristics. In addition, the crystals on the particle surface are less likely to become disordered, which suppresses reactivity with an electrolyte and tends to avoid a decrease in charge/discharge efficiency and an increase in gas generation.

The DBP (dibutyl phthalate) oil absorption of the carbon material (A) of the present invention is preferably 85 mL/100 g or less, more preferably 70 mL/100 g or less, even more preferably 65 mL/100 g or less, and particularly preferably 60 mL/100 g or less, and is preferably 30 mL/100 g or more, and more preferably 40 mL/100 g or more.

When the DBP oil absorption is within the above range, it means that a degree of spheroidization of the carbon material is sufficient, and a streaking or the like tends to less likely to occur when a slurry containing the carbon material is applied. In addition, since a pore structure exists also within the particles, it tends to avoid a decrease in reaction surface.

In this specification, the DBP oil absorption is a value measured in accordance with ISO 4546.

Specifically, the value is measured for 40 g of a sample under conditions of a drip rate of 4 mL/min, a rotation speed of 125 rpm, and a set torque of 500 N m. An example of a measuring device is AbsorbtoMeter E-type manufactured by Brabender.

### [Carbon material (B)]

The carbon material (B) of the present invention is an organic compound-coated carbon material.

The carbon material (B) of the present invention is preferably one in which a basal plane of the carbon material is coated with an organic compound from the viewpoint of suppressing an increase in resistance. When the organic compound-coated carbon material is one in which a basal plane of the carbon material is coated with an organic compound, it is preferable that an initial efficiency can be improved while suppressing an increase in resistance.

The basal plane refers to the benzene condensed plane of the carbon material, and as defined below, is a surface of the carbon material that has a high affinity with toluene.

The organic compound-coated carbon material in which a basal plane of the carbon material is coated with an organic compound can be produced by a production method of the carbon material (B) of the present invention shown below.

The fact that the basal plane of the carbon material is coated with an organic compound can be confirmed by simultaneously measuring the adsorption isotherm and heat of adsorption using toluene gas. Specifically, the surface of the carbon material that has a high affinity with toluene, having a heat of adsorption of 67 kJ/mol or more, is defined as the basal plane, and a fact that the basal plane is coated with an organic compound can be confirmed by the fact that the amount of toluene adsorbed in this area is reduced compared to the carbon material before coating.

In the carbon material (B) of the present invention, the raw carbon material is preferably natural graphite, and the organic compound that coats the raw carbon material is preferably a crosslinked polyvinyl alcohol resin.

Such carbon material (B) of the present invention can be produced by mixing the raw carbon material and an organic compound raw material and preferentially adsorbing the organic compound raw material to the basal plane of the raw carbon material.

### <Raw carbon material for carbon material (B)>

The raw carbon material for the carbon material (B) is not particularly limited, but examples include the following.

### <Types of raw carbon materials>

Examples of raw carbon materials include carbon materials having various degrees of graphitization, from graphite to amorphous.

As the raw carbon material, graphite or carbon materials having a low degree of graphitization (amorphous carbon) are particularly preferred from the viewpoint of being commercially readily available. When such graphite or graphite having a low degree of graphitization (amorphous carbon) is used as the raw carbon material, it is preferable because charge/discharge characteristics at high-current density are significantly greater than when other negative electrode active materials are used.

The graphite may be either natural graphite or artificial graphite, but natural graphite is preferred because it has a large specific surface area and is highly effective in improving an initial efficiency due to the organic compound coating. As graphite, graphite having few impurities is preferred, and may be used after various purification processes as necessary.

Examples of the natural graphite include earthy graphite, scale-like graphite, flake-like graphite, and the like. Among these natural graphites, scale-like graphite and flake-like graphite are preferable, and flake-like graphite is more preferable, because they have a high degree of graphitization and a low amount of impurities. Among natural graphites, spheroidized natural graphite is the most preferable, from the viewpoints of being able to form suitable dense pores inside the carbon material and exhibiting excellent particle packing properties and charge/discharge load characteristics.

Examples of the artificial graphite include those obtained by graphitizing organic substances such as coal tar pitch, coal-based heavy oil, atmospheric residual oil, petroleum-based heavy oil, aromatic hydrocarbons, nitrogen-containing cyclic compounds, sulfur-containing cyclic compounds, polyphenylene, polyvinyl chloride, polyvinyl alcohol, polyacrylonitrile, polyvinyl butyral, natural polymers, polyphenylene sulfide, polyphenylene oxide, furfuryl alcohol resin, phenol-formaldehyde resin, imide resin, and the like by heating at 2500°C or higher.

The raw carbon material may be used by appropriately mixing metal particles, metal oxide particles, and other particles in any combination with the carbon material. The raw carbon material may also be a mixture of multiple materials in each particle. For example, the raw carbon material may be carbonaceous particles in which a surface of graphite is coated with a carbon material having a low degree of graphitization, or particles in which carbon material is aggregated with an appropriate organic material and re-graphitized. Furthermore, the raw carbon material may contain metals capable of alloying with Li, such as Sn, Si, Al, Bi, and the like, in the composite particles.

### <Physical properties of raw carbon material for carbon material (B)>

The d002 value of the raw carbon material is preferably 3.357 Å or less, more preferably 3.356 Å or less, and even more preferably 3.354 Å or less, because graphite is highly crystalline and has sufficient charge/discharge capacity.

The Lc of the raw carbon material is preferably 900 Å or more, and more preferably 1000 Å or more, because graphite is highly crystalline and has sufficient charge/discharge capacity.

The surface functional group amount O/C value of the raw carbon material is preferably 0.01% or more, more preferably 0.1% or more, even more preferably 0.3% or more, and particularly preferably 0.5% or more, and is preferably 4% or less, more preferably 3.6% or less, and even more preferably 3% or less.

When the surface functional group amount O/C value is equal to or more than the lower limit, the interaction between the surface of the raw carbon material and the organic compound becomes stronger, and the organic compound tends to become less likely to peel off. When the surface functional group amount O/C value is equal to or less than the upper limit, it becomes easier to adjust the O/C value by oxidation treatment, and the like, the producing process can be kept short, and there is no need to increase the number of steps, leading to improved productivity and reduced costs.

The volume-based average particle diameter d50 of the raw carbon material is usually 1 µm or more, preferably 4 µm or more, and more preferably 6 µm or more, and is usually 50 µm or less, preferably 30 µm or less, and more preferably 25 µm or less.

When the d50 is equal to or more than the lower limit, the surface area does not become too large, and activity against an electrolyte tends to be suppressed. When the d50 is equal to or less than the upper limit, it tends to be possible to avoid process inconveniences such as streaking, and the like when the material is made into an electrode plate.

The specific surface area (SA) of the raw carbon material is usually 0.3 m²/g or more, preferably 0.5 m²/g or more, more preferably 1 m²/g or more, even more preferably 2 m²/g or more, and particularly preferably 5 m²/g or more, and usually 30 m²/g or less, preferably 20 m²/g or less, and more preferably 15 m²/g or less.

When the specific surface area is equal to or more than the lower limit, it is possible to secure sufficient sites for Li to enter and exit. Therefore, high-speed charge/discharge characteristics and output characteristics are excellent. When the specific surface area is equal to or less than the upper limit, an activity of an active material against an electrolyte can be appropriately suppressed. Therefore, an increase in initial irreversible capacity can be suppressed, so that a battery having a high capacity tends to be manufactured.

The tap density of the raw carbon material is usually 0.1 g/cm³ or more, preferably 0.15 g/cm³ or more, more preferably 0.2 g/cm³ or more, and even more preferably 0.3 g/cm³ or more, and is usually 1.3 g/cm³ or less, preferably 1.2 g/cm³ or less, and more preferably 1.1 g/cm³ or less.

When the tap density is equal to or more than the lower limit, high-speed charge/discharge characteristics are excellent. When the tap density is equal to or less than the upper limit, an increase in carbon density in an electrode plate is suppressed, a decrease in rolling property is suppressed, and a high-density negative electrode sheet tends to be easily formed.

The Raman R value of the raw carbon material is usually 0.1 or more, preferably 0.15 or more, and more preferably 0.2 or more, and is usually 0.6 or less, preferably 0.5 or less, and more preferably 0.4 or less.

When the Raman R value is equal to or more than the lower limit, a crystallinity of a surface of the particle is less likely to be high, and when a density is increased, the crystals are less likely to be oriented parallel to a negative electrode plate, which tends to avoid a decrease in load characteristics. When the Raman R value is equal to or more than the upper limit, the crystals on the particle surface are less likely to become disordered, which suppresses reactivity with an electrolyte and tends to avoid a decrease in charge/discharge efficiency and an increase in gas generation.

### <Method of producing raw carbon material>

As the raw material of the carbon material, there is no particular limitation so long as it is graphitized carbon particles, but as mentioned above, natural graphite, artificial graphite, coke powder, needle coke powder, powder of graphitized materials such as a resin, and the like can be used. Among these, natural graphite is preferred, and among natural graphites, spheroidized natural graphite that has been subjected to spheroidization treatment is particularly preferred because an effect of an organic compound coating treatment is easily achieved. A method for producing spheroidized natural graphite will be described below as an example.

Examples of the spheroidization treatment include an apparatus which repeatedly applies mechanical effects such as compression, friction, shear force, and the like, including the interaction of the particles, mainly impact force. Specifically, an apparatus that includes a rotor provided with a number of blades disposed inside the casing and applies a mechanical action, such as an impact compressive, frictional, shear force, or the like, to the raw carbon material introduced into the inside thereof by rotating the rotor at a high speed is preferable.

When the raw carbon material is flake-like graphite, by carrying out the above mentioned spheroidizing process, the flake-like natural graphite is folded into a sphere, or crushes the peripheral edge portions of the raw carbon material into spheres. Then, fine powder mainly having a size of 5 µm or less produced by crushing adheres to the base particles.

In the method for producing an organic compound-coated carbon material of the present invention, the raw carbon material may be subjected to an isotropic pressure treatment before mixing the raw carbon material with the organic compound raw material.

By isotropically pressing the raw carbon material, internal voids of the raw carbon material are compressed. As a result, a density of the raw carbon material crushed after the pressure treatment is increased, high-speed charging characteristics can be improved, and the organic compound raw material is efficiently coated on the raw carbon material without being excessively absorbed into internal pores of the raw carbon material. In addition, isotropic pressure treatment makes it difficult for the particles to become flattened, allowing the particles to maintain their spherical shape, and also prevents a decrease in fluidity when made into a slurry.

Examples of the pressurizing means that can be used include a roll compactor, a roll press, a pricket machine, a cold isostatic pressurizing device (CIP), a uniaxial molding machine, a tablet machine, and the like. Among these pressurizing means, a cold isostatic pressurizing device is preferable because it can reduce internal pores while maintaining the particle shape.

### <Organic compound raw material>

The organic compound raw material to be mixed with the raw carbon material is preferably one having multiple hydroxyl groups or groups that can be self-crosslinked by heat or light in the molecule from the viewpoint of forming a strong coating.

Preferred examples of the organic compound raw materials include polyol-based resins such as polyvinyl alcohol-based resins, acrylic polyol resins, polyester polyol resins, polyether polyol resins, and the like, silicone resins, epoxy resins, and acrylic and polyester resins having hydrolyzable silyl groups, and the like. More preferred examples of organic compound raw materials include polyvinyl alcohol-based resins, acrylic polyol resins, polyester polyol resins, and acrylic and polyester resins having hydrolyzable silyl groups. Among these, polyvinyl alcohol-based resins, acrylic polyol resins, and polyester polyol resins are even more preferred. From the viewpoint of excellent solvent resistance of an active material layer formed using the organic compound-coated carbon material, polyvinyl alcohol-based resins are particularly preferred.

The specific structure of the polyvinyl alcohol-based resin is not particularly limited as long as it is a resin having a vinyl alcohol structural unit. The polyvinyl alcohol-based resin is typically obtained by saponifying a polyvinyl ester of carboxylic acid obtained by polymerizing a vinyl ester monomer of carboxylic acid such as vinyl acetate, but are not limited to this.

### <Mixing of raw carbon material and organic compound raw material>

To mix the above organic compound raw material and raw carbon material, it is preferable to prepare a solution in which the organic compound raw material is dissolved in a solvent, and mix the solution with the raw carbon material.

The solvent is not particularly limited as long as it dissolves the organic compound raw material. Preferred examples of the solvent include water, ethyl methyl ketone, toluene, acetone, methyl isobutyl ketone, ethanol, and methanol, and more preferred examples include water, ethyl methyl ketone, acetone, methyl isobutyl ketone, ethanol, and methanol. Water is even more preferably.

Additives may be further added to the solution. Examples of additives include crosslinking agents that contribute to crosslinking of organic compound raw materials; surfactants and silane coupling agents that contribute to wettability and adhesion with the negative electrode active material and binder resin; inorganic oxide particles that contribute to reducing a resistance of the coating; lithium compound particles; conductive polymers such as polyaniline sulfonic acid, and the like; and compounds that form complex ions with lithium ion, such as polyethylene oxide, complex hydrides, and the like.

As the method for mixing the raw carbon material and the organic compound raw material, a method in which the raw carbon material and a solution of the organic compound raw material are mixed is preferred, since the organic compound raw material can be uniformly coated on the basal plane of the raw carbon material so as to suppress an initial gas amount and a stored gas amount.

Examples of the mixing method include a method of stirring using a stirring blade in a fixed container, a method in which a container itself rotates to mix by rolling contents, and a method of fluidizing and mixing by air flow. Among these, a method of stirring using a stirring blade in a fixed container is preferred from the viewpoint of mixing uniformity.

During the mixing of the raw carbon material and the organic compound raw material, the mixture may be heated to efficiently impregnate the organic compound raw material into the internal pores of the raw carbon material. The heating temperature is preferably 80°C to 180°C, and more preferably 100°C to 150°C.

During the mixing of the raw carbon material and the organic compound raw material, an isotropic pressure treatment may be carried out since the organic compound raw material can be efficiently impregnated into the internal pores of the raw carbon material. In addition, the organic compound raw material may be efficiently impregnated into the internal pores of the raw carbon material by using a method of mixing the raw carbon material and the organic compound raw material under reduced pressure, a method of treating the raw carbon material with ozone before the mixing, or the like.

The concentration of the organic compound raw material in the organic compound raw material solution is preferably 0.01% by mass or more, more preferably 0.03% by mass or more, even more preferably 0.05% by mass or more, and is preferably 20% by mass or less, more preferably 15% by mass or less, and even more preferably 10% by mass or less based on 100% by mass of the organic compound raw material solution.

When the concentration is within the above range, the organic compound raw material can be uniformly adsorbed onto the basal plane of the raw carbon material, and the effects of the present invention can be efficiently obtained.

The amount of the organic compound raw material to be mixed is usually 0.05 parts by mass or more, preferably 0.1 parts by mass or more, and more preferably 0.15 parts by mass or more, and is usually 2 parts by mass or less, preferably 1.5 parts by mass or less, and more preferably 0.8 parts by mass or less based on 100 parts by mass of the raw carbon material.

When the amount to be mixed is equal to or more than the lower limit, the organic compound coated on the carbon material is uniformly coated, and an initial efficiency of a battery can be improved. When the amount to be mixed is equal to or less than the upper limit, the amount of organic compound coated on the carbon material is not too much, and a reversible capacity of a battery does not tend to decrease.

The amount of the organic compound raw material solution to be mixed may be appropriately set based on the concentration of the organic compound raw material solution and the amount of the organic compound raw material to be mixed, and is preferably 1 part by mass or more, and more preferably 5 parts by mass or more, and is preferably 300 parts by mass or less, and more preferably 250 parts by mass or less based on 100 parts by mass of the raw carbon material.

When the amount to be mixed is within the above range, the mixture can be mixed uniformly, and the drying time in the subsequent process can be shortened.

The solution of the organic compound raw material may be added to a slurry in which the raw carbon material is dispersed, and a binder may be added as necessary, and the resulting slurry may be used as a slurry to be applied to a current collector, which will be described later. This embodiment can simplify the battery producing process.

After mixing the raw carbon material and the organic compound raw material, it is preferable to dry them. From the viewpoint of forming a strong coating, the organic compound raw material may be crosslinked at the same time as drying.

The heating temperature for drying is usually equal to or higher than the boiling point of the solvent and equal to or lower than the decomposition temperature of the organic compound raw material. The heating temperature is preferably 50 to 300°C, and more preferably 100 to 250°C.

When the heating temperature for drying is within the above range, the drying efficiency is sufficient, and it is possible to avoid a decrease in battery performance due to residual solvent, and it is easy to prevent the decomposition of the organic compound raw material and the reduction in effect due to a weakened interaction between the raw carbon material and the organic compound.

When drying is performed under reduced pressure, the pressure is usually -0.1 MPa or more, and preferably -0.08 MPa or more, and is usually 0 MPa or less, and preferably - 0.03 MPa or less, in gauge pressure notation (difference from atmospheric pressure).

When the pressure is within the above range, drying can be performed relatively efficiently.

The method for drying the mixture of the raw carbon material and the organic compound raw material is preferably a method that forms a uniform coating of the organic compound from the viewpoints of suppressing the amount of initial gas generated during the manufacture of a non-aqueous secondary battery and suppressing the amount of storage gas generated during storage of the non-aqueous secondary battery. By uniformly coating with the organic compound, the organic compound can be efficiently adsorbed onto the specific mesopore surface. Therefore, by suppressing side reactions of an electrolyte occurring in the mesopores, the effect of suppressing gas generation can be easily obtained.

Prior to drying, a step of filtering the mixture of the raw carbon material and the organic compound raw material and a step of washing the obtained residue with water may be included. These steps make it possible to remove excess organic compound raw material that is not directly adhered to the raw carbon material, and it is possible to suppress a decrease in battery capacity and an increase in battery resistance caused by the adhesion of excess organic compound raw material.

When other components are to be contained in the carbon material (B) of the present invention, it is preferable to prepare a solution in which the other components are dissolved in a solvent, similar to the organic compound raw material, mix the solution with the raw carbon material, and then dry by heating and/or reducing pressure.

When other components are to be added, a solution of the other components may be prepared separately from the solution of the organic compound raw material, or a solution may be prepared by adding the other components to the same solvent as the solution of the organic compound raw material.

The organic compound-coated carbon material obtained through the above steps may be subjected to powder processing such as pulverization, crushing, classification, and the like, as necessary.

There are no particular limitations on the apparatus used for pulverization and crushing. Examples of coarse crushers include shear mills, jaw crushers, impact crushers, cone crushers, and the like. Examples of intermediate crushers include roll crushers, hammer mills, and the like. Examples of fine crushers include ball mills, vibration mills, pin mills, stirring mills, jet mills, and the like.

There are no particular limitations on the apparatus used for classification. In the case of dry sieving, examples include rotary sieves, shaking sieves, swirling sieves, vibrating sieves, and the like. In the case of dry airflow classification, examples include gravity classifiers, inertia classifiers, centrifugal classifiers (classifiers, cyclones, and the like), and the like. Wet sieving, mechanical wet classifiers, hydraulic classifiers, sedimentation classifiers, centrifugal wet classifiers, and the like can also be used.

### <Physical properties of carbon material (B)>

The cumulative pore volume of the carbon material (B) of the present invention in a range of pore diameters of 0.01 µm or more and 1 µm or less is preferably 0.01 mL/g or more, more preferably 0.02 mL/g or more, and even more preferably 0.03 mL/g or more, and is preferably 0.30 mL/g or less, more and is preferably 0.20 mL/g or less, and even more preferably 0.15 mL/g.

When the cumulative pore volume in a range of pore diameters of 0.01 µm or more and 1 µm or less is within the above range, an electrolyte can be smoothly and efficiently spread inside the particles. Therefore, it becomes possible to effectively and efficiently utilize the Li ion insertion and extraction sites present not only on the outer periphery of the particles but also inside the particles during charging and discharging. As a result, good low-temperature output characteristics tend to be exhibited.

The DBP (dibutyl phthalate) oil absorption of the carbon material (B) of the present invention is preferably 85 mL/100 g or less, more preferably 70 mL/100 g or less, even more preferably 65 mL/100 g or less, and particularly preferably 60 mL/100 g or less, and is preferably 30 mL/100 g or more, and more preferably 40 mL/100 g or more.

When the DBP oil absorption is equal to or less than the upper limit, it means that an internal pores can be reduced while maintaining the particle shape, and high-speed charging characteristics are excellent. When the DBP oil absorption is equal to or more than the lower limit, a pore structure also exists within the particles, so it tends to avoid a decrease in the likelihood of the Li ion insertion/extraction reaction occurring.

The carbon material (B) of the present invention is a carbon material coated with an organic compound. The coating amount of the carbon material (B) of the present invention is preferably 0.05% by mass or more, more preferably 0.10% by mass or more, and even more preferably 0.15% by mass or more, and is preferably 2.00% by mass or less, preferably 1.50% by mass or less, and even more preferably 0.80% by mass or less, based on 100% by mass of the carbon material (B).

When the coating amount is equal to or more than the lower limit, the organic compound coated on the carbon material (B) is uniformly coated, and an initial efficiency of a battery tends to improve. When the coating amount is equal to or less than the upper limit, the amount of the organic compound coated on the carbon material (B) is not too large, and a decrease in reversible capacity of a battery and an increase in resistance tend to be suppressed.

In this specification, the coating amount of the organic compound on the carbon material (B) of the present invention is defined as the mass reduction rate at 200°C to 700°C when the carbon material (B) of the present invention is heated in nitrogen using a TG-DTA measuring device.

The volume-based average particle diameter d50 of the carbon material (B) of the present invention is preferably 1 µm or more, more preferably 3 µm or more, even more preferably 5 µm or more, particularly preferably 10 µm or more, and most preferably 15 µm or more, and is preferably 50 µm or less, more preferably 45 µm or less, even more preferably 40 µm or less, particularly preferably 35 µm or less, and most preferably 30 µm or less.

When the d50 is within the above range, there is a tendency to suppress an increase in irreversible capacity and a loss of initial battery capacity of a secondary battery obtained by using this organic compound-coated carbon material as a negative electrode material. In addition, there is a tendency to suppress an occurrence of process inconveniences such as streaking, and the like when applying of a slurry, a decrease in high-current density charge/discharge characteristics, and a decrease in low-temperature output characteristics.

The circularity of the carbon material (B) of the present invention is preferably 0.88 or more, more preferably 0.90 or more, and even more preferably 0.91 or more, and is preferably 1 or less, more preferably 0.98 or less, and even more preferably 0.97 or less.

When the circularity is within the above range, there is a tendency that a decrease in high-current density charge/discharge characteristics of secondary batteries obtained by using the carbon material (B) of the present invention as a negative electrode material can be suppressed.

A method for improving the circularity is preferably a method of making the carbon material (B) spherical by subjecting it to a spheroidization treatment, from the viewpoint of regulating a shape of interparticle voids when used as a negative electrode. Examples of spheroidization treatment include a method of mechanically making a shape closer to a sphere by applying a shear force or compression force, and a mechanical/physical processing method of granulating multiple carbon materials using a binder or an adhesive force of the particles themselves.

The tap density of the carbon material (B) of the present invention is preferably 0.7 g/cm³ or more, more preferably 0.8 g/cm³ or more, even more preferably 0.85 g/cm³ or more, particularly preferably 0.9 g/cm³ or more, and most preferably 0.95 g/cm³ or more, and is preferably 1.3 g/cm³ or less, more preferably 1.2 g/cm³ or less, and even more preferably 1.1 g/cm³ or less.

When the tap density is within the above range, process inconveniences such as streaking, and the like when the material is made into an electrode plate are suppressed, and high-speed charge/discharge characteristics are excellent. In addition, an increase in carbon density in the electrode plate and a decrease in rollability are suppressed, and a high-density negative electrode sheet tends to be easily formed.

The d002 value of the carbon material (B) of the present invention is preferably 3.357 Å or less, more preferably 3.356 Å or less, and even more preferably 3.354 Å or less, because graphite is highly crystalline and has sufficient charge/discharge capacity.

The Lc of the carbon material (B) of the present invention is preferably 900 Å or more, and more preferably 1000 Å or more, because graphite is highly crystalline and has sufficient charge/discharge capacity.

The ash content of the carbon material (B) of the present invention is preferably 0.0001% by mass or more, and is preferably 1% by mass or less, more preferably 0.5% by mass or less, and even more preferably 0.1% by mass or less, based on 100% by mass of the carbon material (B).

When the ash content is within the above range, when a secondary battery is formed, the deterioration of battery performance due to the reaction between the carbon material composition of the present invention containing the carbon material (B) as the negative electrode material and the electrolyte during charging and discharging can be suppressed to a negligible level. In addition, since the production of the negative electrode material does not require a large amount of time and energy, and does not require facilities for preventing contamination, an increase in costs can be suppressed.

The specific surface area (SA) of the carbon material (B) of the present invention is preferably 1 m²/g or more, more preferably 2 m²/g or more, and even more preferably 2.5 m²/g or more, and is preferably 11 m²/g or less, more preferably 9 m²/g or less, even more preferably 8 m²/g or less, particularly preferably 7 m²/g or less, and most preferably 6 m²/g or less.

When the specific surface area is within the above range, the area for Li to enter and exit during charging and discharging can be sufficiently secured. Therefore, high-speed charging and discharging characteristics and output characteristics are excellent, and activity of the active material against the electrolyte can be appropriately suppressed. Therefore, there is a tendency that it is possible to manufacture a high-capacity battery in which the initial irreversible capacity is not large. In addition, when a negative electrode is formed using the carbon material composition of the present invention containing this carbon material (B) as a negative electrode material, an increase in reactivity with an electrolyte can be suppressed, and gas generation can be suppressed. Therefore, a preferable non-aqueous secondary battery can be provided.

The total pore volume of the carbon material (B) of the present invention is preferably 0.1 mL/g or more, more preferably 0.2 mL/g or more, even more preferably 0.25 mL/g or more, and particularly preferably 0.5 mL/g or more, and is preferably 10 mL/g or less, more preferably 5 mL/g or less, even more preferably 2 mL/g or less, and particularly preferably 1 mL/g or less.

When the total pore volume is within the above range, it is no need to use an excessive amount of binder when forming an electrode plate, and a dispersion effect of a thickener and binder is easily obtained.

The average pore diameter of the carbon material (B) of the present invention is preferably 0.1 µm or more, more preferably 0.5 µm or more, even more preferably 1.0 µm or more, and particularly preferably 2.0 µm or more, and is preferably 80 µm or less, more preferably 50 µm or less, and even more preferably 20 µm or less.

When the average pore diameter is within the above range, there is no need to use an excessive amount of binder when forming an electrode plate, and there is a tendency that a decrease in high-current density charge/discharge characteristics of a battery can be avoided.

The true density of the carbon material (B) of the present invention is preferably 1.9 g/cm³ or more, more preferably 2 g/cm³ or more, even more preferably 2.1 g/cm³ or more, and particularly preferably 2.2 g/cm³ or more. The upper limit of the true density is 2.26 g/cm³, which is the theoretical value of graphite.

When the true density is within the above range, the crystallinity of the carbon is not too low, and when a secondary battery is formed, an increase in initial irreversible capacity of the secondary battery can be suppressed.

The aspect ratio of the carbon material (B) of the present invention is preferably 1.1 or more, and more preferably 1.2 or more, and is preferably 10 or less, more preferably 8 or less, even more preferably 5 or less, and particularly preferably 3 or less.

When the aspect ratio is within the above range, a streaking of a slurry containing the carbon material composition of the present invention including the carbon material (B) is less likely to occur when forming an electrode plate, and a uniform coating surface can be obtained. As a result, there is a tendency to avoid a decrease in high-current density charge/discharge characteristics of a secondary battery.

The Raman R value of the carbon material (B) of the present invention is preferably 0.1 or more, more preferably 0.15 or more, and even more preferably 0.2 or more, and is preferably 0.6 or less, more preferably 0.5 or less, and even more preferably 0.4 or less.

When the Raman R value is within the above range, a crystallinity of a surface of the carbon material (B) is less likely to be high, and when a density is increased, the crystals are less likely to be oriented parallel to a negative electrode plate, which tends to avoid a decrease in load characteristics. In addition, the crystals on the particle surface are less likely to become disordered, which suppresses reactivity with an electrolyte and tends to avoid a decrease in charge/discharge efficiency and an increase in gas generation.

The dmax of the carbon material (B) of the present invention is preferably 200 µm or less, more preferably 150 µm or less, even more preferably 120 µm or less, and particularly preferably 100 µm or less.

When the dmax is within the above range, it tends to be possible to avoid process inconveniences such as streaking, and the like.

The d10 of the carbon material (B) of the present invention is preferably 1 µm or more, more preferably 2 µm or more, even more preferably 3 µm or more, particularly preferably 5 µm or more, and most preferably 7 µm or more, and is preferably 30 µm or less, more preferably 20 µm or less, and even more preferably 17 µm or less.

When the d10 is within the above range, a tendency of particles to aggregate is not too strong, and an occurrence of process inconveniences such as an increase in slurry viscosity, and the like, a decrease in electrode strength in secondary batteries, and a decrease in initial charge/discharge efficiency can be avoided. In addition, a decrease in low-temperature output characteristics due to a decrease in high-current density charge/discharge characteristics tends to be avoided.

The d90 of the carbon material (B) of the present invention is preferably 15 µm or more, more preferably 18 µm or more, even more preferably 20 µm or more, and particularly preferably 25 µm or more, and is preferably 100 µm or less, more preferably 70 µm or less, even more preferably 60 µm or less, particularly preferably 50 µm or less, and most preferably 45 µm or less.

When the d90 is within the above range, it is possible to avoid a decrease in electrode strength and a decrease in initial charge/discharge efficiency in secondary batteries, and it also tends to be possible to avoid an occurrence of process inconveniences such as streaking, and the like when applying a slurry, a decrease in high-current density charge/discharge characteristics, and a decrease in low-temperature input/output characteristics.

The particle number frequency having a particle diameter of 3 µm or less of the carbon material (B) of the present invention is preferably 1% or more, and more preferably 10% or more, and is preferably 60% or less, more preferably 55% or less, even more preferably 50% or less, particularly preferably 40% or less, and most preferably 30% or less.

When the particle number frequency is within the above range, a particle collapse and fine powder peeling are less likely to occur during slurry kneading, electrode rolling, charge/discharge, and the like. Therefore, low-temperature output characteristics and cycle characteristics tend to be good.

The amount of elution of organic compounds from the carbon material (B) of the present invention is preferably 20% by mass or less, more preferably 15% by mass or less, even more preferably 10% by mass or less, and particularly preferably 5% by mass or less, based on 100% by mass of the organic compounds contained in the carbon material (B).

When the amount of elution of organic compounds is within the above range, the organic compounds are less likely to peel off during high-temperature storage or charge/discharge cycles, and deterioration of storage characteristics and charge/discharge cycle characteristics can be effectively suppressed.

In this specification, the amount of elution of organic compounds is determined as the ratio of the peak intensity of the eluted component to the peak intensity when 100% is eluted in the following GPC: That is, the organic compound-coated carbon material is immersed in a mixed solvent of ethylene carbonate and ethyl methyl carbonate (volume ratio = 30:70) containing no salt at 25°C for 5 hours, and then the supernatant is recovered and measured by GPC.

### [Ratio of carbon material (A) and carbon material (B)]

The carbon material composition of the present invention preferably contains 20 to 80% by mass of the carbon material (A) and 20 to 80% by mass of the carbon material (B) based on a total of 100% by mass of the carbon material (A) and the carbon material (B) of the present invention.

When the content of the carbon material (A) in the carbon material composition of the present invention is equal to or more than the lower limit and the content of the carbon material (B) is equal to or less than the upper limit, blocking of an electrolyte flow path in an electrode plate during pressing to increase density is suppressed, and the negative electrode plate has excellent liquid impregnation properties and excellent rate characteristics. When the content of the carbon material (A) in the carbon material composition of the present invention is equal to or less than the upper limit and the content of the carbon material (B) is equal to or more than the lower limit, a negative electrode plate can be densified with a relatively weak pressing pressure, a capacity of a secondary battery can be improved, the carbon material is less likely to be crushed and new surfaces that are prone to side reactions with an electrolyte are less likely to be generated, and an initial efficiency and remaining capacity retention rate after high-temperature storage are excellent.

The content ratio of the carbon material (A) and the carbon material (B) based on 100% by mass of the carbon material composition of the present invention is more preferably 40 to 75% by mass of the carbon material (A) and 25 to 60% by mass of the carbon material (B), and even more preferably 50 to 70% by mass of the carbon material (A) and 30 to 50% by mass of the carbon material (B).

### [Property ratio of carbon material (A) and carbon material (B)]

The ratio of the d50 of the carbon material (B) of the present invention to the d50 of the carbon material (A) of the present invention, Rd50 = [volume-based average particle diameter (d50) of the carbon material (B)] / [volume-based average particle diameter (d50) of the carbon material (A)] is preferably 0.1 to 2.5, and more preferably 0.2 to 2.

When the value of the Rd50 is within the above range, the carbon material (B) can be present in the gap between the carbon materials (A), or the carbon material (A) can be present in the gap between the carbon materials (B), thereby realizing a high density negative electrode plate. In addition, the volume change between the carbon materials (A) and the carbon materials (B) accompanying the absorption and release of alkali ions such as Li ions due to charging and discharging is absorbed by the gap formed by the carbon materials (A) and the carbon materials (B). This makes it possible to suppress the disconnection of the conductive path due to the volume change between the carbon materials (A) and the carbon materials (B), thereby realizing improved cycle characteristics, rapid charge/discharge characteristics, and high capacity.

The ratio of the d10 of the carbon material (B) of the present invention to the d10 of the carbon material (A) of the present invention, Rd10 = [d10 of the carbon material (B)] / [d10 of the carbon material (A)] is preferably 0.1 to 2.5, and more preferably 0.2 to 2.

When the value of the Rd10 is within the above range, the carbon material (B) can be present in the gap between the carbon materials (A), or the carbon material (A) can be present in the gap between the carbon materials (B), thereby realizing a high density negative electrode plate. In addition, the volume change between the carbon materials (A) and the carbon materials (B) accompanying the absorption and release of alkali ions such as Li ions due to charging and discharging is absorbed by the gap formed by the carbon materials (A) and the carbon materials (B). This makes it possible suppress the disconnection of the conductive path due to the volume change between the carbon materials (A) and the carbon materials (B), thereby realizing improved cycle characteristics, rapid charge/discharge characteristics, and high capacity.

The ratio of the d90 of the carbon material (B) of the present invention to the d90 of the carbon material (A) of the present invention, Rd90 = [d90 of the carbon material (B)] / [d90 of the carbon material (A)] is preferably 0.1 to 2.5, and more preferably 0.2 to 2.

When the value of the Rd90 is within the above range, the carbon material (B) can be present in the gap between the carbon materials (A), or the carbon material (A) can be present in the gap between the carbon materials (B), thereby realizing a high density negative electrode plate. In addition, the volume change of the carbon materials (A) and the carbon materials (B) due to the absorption and release of alkali ions such as Li ions during charging and discharging is absorbed by the gap formed between the carbon materials (A) and the carbon materials (B). Thie makes it possible to suppress the disconnection of the conductive path due to the volume change between the carbon materials (A) and the carbon materials (B), thereby realizing improved cycle characteristics, rapid charge/discharge characteristics, and high capacity.

The ratio of the specific surface area (SA) of the carbon material (B) of the present invention to the specific surface area (SA) of the carbon material (A) of the present invention, RSA = [specific surface area (SA) of the carbon material (B)] / [specific surface area (SA) of the carbon material (A)] is preferably 0.1 to 10, and more preferably 0.2 to 5.

When the value of the RSA is within the above range, the area for insertion and extraction of Li during charging and discharging can be sufficiently secured, resulting in excellent high-speed charge/discharge characteristics and output characteristics. In addition, the activity of the active material against an electrolyte can be appropriately suppressed. Therefore, an increase in initial irreversible capacity can be suppressed, and there is a tendency for a high-capacity battery to be manufactured.

The ratio of the cumulative pore volume in a range of pore diameters of 0.01 µm or more and 1 µm or less of the carbon material (B) of the present invention to the cumulative pore volume in a range of pore diameters of 0.01 µm or more and 1 µm or less of the carbon material (A) of the present invention, RCPV = [cumulative pore volume in a range of pore diameters of 0.01 µm or more and 1 µm or less of the carbon material (B)] / [cumulative pore volume in a range of pore diameters of 0.01 µm or more and 1 µm or less of the carbon material (A)] is preferably 0.1 to 10, and more preferably 0.2 to 5.

When the value of the RCPV is within the above range, an area for insertion and extraction of Li during charging and discharging can be sufficiently secured, resulting in excellent high-speed charge/discharge characteristics and output characteristics. In addition, the activity of the active material against an electrolyte can be appropriately suppressed. Therefore, an increase in initial irreversible capacity can be suppressed, and there is a tendency for a high-capacity battery to be manufactured.

The ratio of the total pore volume of the carbon material (B) of the present invention to the total pore volume of the carbon material (A) of the present invention, RTPV = [total pore volume of the carbon material (B)] / [total pore volume of the carbon material (A)] is preferably 0.1 to 10, and more preferably 0.2 to 5.

When the value of the RTPV is within the above range, there is no need to use an excessive amount of binder when forming an electrode plate, and a dispersion effect of a thickener and binder is easily obtained.

The ratio of the average pore diameter of the carbon material (B) of the present invention to the average pore diameter of the carbon material (A) of the present invention, RAPV = [average pore diameter of the carbon material (B)] / [average pore diameter of the carbon material (A)] is preferably 0.1 to 10, and more preferably 0.2 to 5.

When the value of the RAPV is within the above range, there is no need to use an excessive amount of binder when forming an electrode plate, and a dispersion effect of a thickener and binder is easily obtained.

### [Method of producing carbon material composition]

The carbon material composition of the present invention can be produced by mixing the carbon material (A) of the present invention and the carbon material (B) of the present invention, preferably in the above mentioned preferred content ratio.

There is no particular restriction on the mixing method, and any method may be used as long as the carbon material (A) and the carbon material (B) are mixed sufficiently uniformly.

The carbon material composition of the present invention may contain other components other than the carbon material (A) of the present invention and the carbon material (B) of the present invention, within the scope of not impairing the object of the present invention.

Examples of other components that the carbon material composition of the present invention may contain include one or more conductive additives such as silicon, carbon black, artificial graphite powder, and the like. When the carbon material composition of the present invention contains these other components, the content ratio is preferably 20% by mass or less, and particularly 10% by mass or less, based on 100% by mass of the carbon material composition of the present invention.

The carbon material composition of the present invention containing such other components can be produced by mixing the carbon material (A) of the present invention and the carbon material (B) of the present invention with the other components when producing the carbon material composition of the present invention.

### [Physical properties of carbon material composition]

The mass reduction rate of the carbon material composition of the present invention is preferably 0.04% by mass or more, more preferably 0.06% by mass or more, and even more preferably 0.08% by mass or more, and is preferably 0.48% by mass or less, more preferably 0.40% by mass or less, and even more preferably 0.30% by mass or less, based on 100% by mass of the carbon material composition.

When the mass reduction rate is equal to or more than the lower limit, the amount of the organic compound coating on the carbon material (B) is sufficient, and the initial efficiency and high-temperature storage characteristics are excellent. When the mass reduction rate is equal to or less than the upper limit, the amount of the organic compound coating on the carbon material (B) is not excessive, and problems such as a decrease in electronic conductivity of the negative electrode plate, powder falling from the current collector, an increase in resistance during charging and discharging, and the like can be suppressed.

In this specification, the mass reduction rate of the carbon material composition of the present invention is the value of the mass reduction rate at 200°C to 700°C when the carbon material composition of the present invention is heated in nitrogen using a TG-DTA device.

In order to obtain a carbon material composition having such mass reduction rate, the amount of organic compound coating on the carbon material (B) and the blending ratio of the carbon material (A) and the carbon material (B) may be adjusted.

The volume-based average particle diameter d50 of the carbon material composition of the present invention is preferably 3 µm or more, more preferably 8 µm or more, even more preferably 10 µm or more, and particularly preferably 12 µm or more, and is preferably 30 µm or less, more preferably 27 µm or less, even more preferably 25 µm or less, and particularly preferably 23 µm or less.

When the d50 is equal to or more than the lower limit, it is possible to prevent an increase in irreversible capacity due to an increase in specific surface area. When the d50 is equal to or less than the upper limit, it is possible to prevent a decrease in rapid charge/discharge properties due to a decrease in contact area between an electrolyte and the particles of the carbon material composition.

The d10 of the carbon material composition of the present invention is preferably 1 µm or more, more preferably 2 µm or more, even more preferably 3 µm or more, particularly preferably 5 µm or more, and most preferably 7 µm or more, and is preferably 30 µm or less, more preferably 20 µm or less, and even more preferably 17 µm or less.

When the d10 is within the above range, a tendency of particles to aggregate is not too strong, and an occurrence of process inconveniences such as an increase in slurry viscosity, and the like, a decrease in electrode strength in secondary batteries, and a decrease in initial charge/discharge efficiency can be avoided. In addition, a decrease in low-temperature input/output characteristics due to a decrease in high-current density charge/discharge characteristics tends to be avoided.

The d90 of the carbon material composition of the present invention is preferably 15 µm or more, more preferably 18 µm or more, even more preferably 20 µm or more, and particularly preferably 25 µm or more, and is preferably 100 µm or less, more preferably 70 µm or less, even more preferably 60 µm or less, particularly preferably 50 µm or less, and most preferably 45 µm or less.

When the d90 is within the above range, it is possible to avoid a decrease in electrode strength and a decrease in initial charge/discharge efficiency in secondary batteries, and it also tends to be possible to avoid an occurrence of process inconveniences such as streaking, and the like when applying a slurry, a decrease in high-current density charge/discharge characteristics, and a decrease in low-temperature input/output characteristics.

The dmax of the carbon material composition of the present invention is preferably 200 µm or less, more preferably 150 µm or less, even more preferably 120 µm or less, and particularly preferably 100 µm or less.

When the dmax is within the above range, it tends to be possible to avoid process inconveniences such as streaking, and the like when forming an electrode plate.

The particle number frequency having a particle diameter of 3 µm or less of the carbon material composition of the present invention is preferably 1% or more, and more preferably 10% or more, and is preferably 60% or less, more preferably 55% or less, even more preferably 50% or less, particularly preferably 40% or less, and most preferably 30% or less.

When the particle number frequency is within the above range, a particle collapse and fine powder peeling are less likely to occur during slurry kneading, electrode rolling, charge/discharge, and the like. Therefore, low-temperature output characteristics and cycle characteristics tend to be good.

The ash content of the carbon material composition of the present invention is preferably 0.0001% by mass or more, and is preferably 1% by mass or less, more preferably 0.5% by mass or less, and even more preferably 0.1% by mass or less, based on 100% by mass of the carbon material composition.

When the ash content is within the above range, when a secondary battery is formed, the deterioration of battery performance due to the reaction between the carbon material composition and the electrolyte can be suppressed to a negligible level. In addition, since the production of the negative electrode material does not require a large amount of time and energy, and does not require facilities for preventing contamination, an increase in costs can be suppressed.

The tap density of the carbon material composition of the present invention is preferably 0.8 to 1.8 g/cm³, more preferably 0.9 to 1.7 g/cm³, and even more preferably 1.0 to 1.6 g/cm³.

When the tap density is within the above range, when the carbon material composition is used as a negative electrode, the electrolyte and the carbon material (B) can be present in the gaps formed by the carbon material (A), and high capacity and high rate characteristics can be realized.

The specific surface area of the carbon material composition of the present invention measured by the BET method is usually 0.5 m²/g or more, preferably 2 m²/g or more, and more preferably 2.5 m²/g or more, and is usually 30 m²/g or less, preferably 20 m²/g or less, more preferably 10 m²/g or less, even more preferably 8 m²/g or less, and is particularly preferably 6.5 m²/g or less.

When the specific surface area is equal to or more than the lower limit, there are sufficient sites for Li to enter and exit, and the lithium-ion secondary battery has excellent high-speed charge/discharge characteristics, output characteristics, and low-temperature input/output characteristics. When the specific surface area is equal to or less than the upper limit, the activity of the active material against an electrolyte can be suppressed, and side reactions with the electrolyte can be suppressed, thereby suppressing a decrease in initial charge/discharge efficiency of a battery and an increase in amount of gas generated, resulting in excellent battery capacity.

The true density of the carbon material composition of the present invention is preferably 1.9 g/cm³ or more, more preferably 2 g/cm³ or more, even more preferably 2.1 g/cm³ or more, and particularly preferably 2.2 g/cm³ or more. The upper limit of the true density is 2.26 g/cm³, which is the theoretical value of graphite.

When the true density is within the above range, the crystallinity of the carbon is not too low, and when the secondary battery is formed, an increase in initial irreversible capacity of the secondary battery can be suppressed.

The DBP (dibutyl phthalate) oil absorption of the carbon material composition of the present invention is preferably 85 mL/100 g or less, more preferably 70 mL/100 g or less, even more preferably 65 mL/100 g or less, and particularly preferably 60 mL/100 g or less, and is preferably 30 mL/100 g or more, and more preferably 40 mL/100 g or more.

When the DBP oil absorption is equal to or less than the upper limit, it means that internal pores can be reduced while maintaining the particle shape, and high-speed charging characteristics are excellent. When the DBP oil absorption is equal to or more than the lower limit, a pore structure exists also within the particles, so it tends to avoid a decrease in reaction surface.

The cumulative pore volume in a range of pore diameters of 0.01 µm or more and 1 µm or less of the carbon material composition of the present invention is preferably 0.01 mL/g or more, more preferably 0.02 mL/g or more, and even more preferably 0.03 mL/g or more, and is preferably 0.30 mL/g or less, more preferably 0.20 mL/g or less, and even more preferably 0.15 mL/g or less.

When the cumulative pore volume in a range of pore diameters of 0.01 µm or more and 1 µm or less is within the above range, an electrolyte can be smoothly and efficiently spread inside the particles. Therefore, it becomes possible to effectively and efficiently utilize the Li ion insertion and extraction sites present not only on the outer periphery of the particles but also inside the particles during charging and discharging. As a result, good low-temperature output characteristics tend to be exhibited.

The total pore volume of the carbon material composition of the present invention is preferably 0.1 mL/g or more, more preferably 0.2 mL/g or more, even more preferably 0.25 mL/g or more, and particularly preferably 0.5 mL/g or more, and is preferably 10 mL/g or less, more preferably 5 mL/g or less, even more preferably 2 mL/g or less, and particularly preferably 1 mL/g or less.

When the total pore volume is within the above range, it is no need to use an excessive amount of binder when forming an electrode plate, and a dispersion effect of a thickener and binder is easily obtained.

The average pore diameter of the carbon material composition of the present invention is preferably 0.1 µm or more, more preferably 0.5 µm or more, even more preferably 1.0 µm or more, and particularly preferably 2.0 µm or more, and is preferably 80 µm or less, more preferably 50 µm or less, and even more preferably 20 µm or less.

When the average pore diameter is within the above range, there is no need to use an excessive amount of binder when forming an electrode plate, and there is a tendency that a decrease in high-current density charge/discharge characteristics of the battery can be avoided.

The amount of elution of organic compounds from the carbon material composition of the present invention is preferably 20% by mass or less, more preferably 15% by mass or less, even more preferably 10% by mass or less, and particularly preferably 5% by mass or less, based on 100% by mass of the organic compound contained in the carbon material composition.

When the amount of elution of organic compounds is within the above range, the organic compounds are less likely to peel off during high-temperature storage or charge/discharge cycles, and deterioration of storage characteristics and charge/discharge cycle characteristics can be effectively suppressed.

### (Negative electrode)

The negative electrode of the present invention (hereinafter sometimes referred to as "negative electrode sheet") includes a current collector and an active material layer formed on the current collector, and the active material layer comprises at least the carbon material composition of the present invention. The active material layer preferably further includes a binder.

The negative electrode of the present invention is formed by dispersing the carbon material composition of the present invention and a binder in a dispersion medium to form a slurry, and then applying this slurry to a current collector.

As the dispersion medium, an organic solvent such as alcohol, and the like or water can be used. This slurry may further contain a conductive additive such as carbon black, artificial graphite powder, and the like.

Examples of the current collector to which the slurry is applied include thin metal films such as a rolled copper foil, an electrolytic copper foil, a stainless steel foil, and the like.

The density of the active material layer varies depending on the application, but in applications where capacity is important, it is preferably 1.45 g/cm³ or more, more preferably 1.5 g/cm³ or more, even more preferably 1.55 g/cm³ or more, and particularly preferably 1.6 g/cm³ or more, and is preferably 1.9 g/cm³ or less.

When the density is within the above range, the battery capacity per unit volume can be sufficiently secured, and the rate characteristics are less likely to decrease.

### (Secondary battery)

The secondary battery of the present invention, particularly the lithium-ion secondary battery, has the same basic structure as the conventionally known lithium-ion secondary battery, and generally includes a positive electrode and a negative electrode capable of absorbing and releasing lithium ions, and an electrolyte. The negative electrode of the present invention described above is used as the negative electrode.

The positive electrode is one in which a positive electrode active material layer containing a positive electrode active material and a binder is formed on a current collector.

As the electrolyte, a non-aqueous electrolytic solution in which a lithium salt is dissolved in a non-aqueous solvent, or a non-aqueous electrolytic solution made into a gel-like, rubber-like, or solid sheet form using an organic polymer compound, and the like, is used.

A porous separator such as a porous membrane, nonwoven fabric, or the like is usually interposed between the positive electrode and the negative electrode to prevent short circuits between the electrodes. In this case, the non-aqueous electrolyte is used by impregnating to the porous separator.

### (Application)

Since the carbon material composition of the present invention makes it easy to increase a densify of a negative electrode plate, and has an excellent initial efficiency, rate characteristics, and residual capacity retention rate after high-temperature storage, it can be suitably used as an active material for a negative electrode of a secondary battery, and are more suitably used as an active material for a negative electrode of a non-aqueous secondary battery. It can be particularly suitably used as an active material for a negative electrode of a lithium-ion secondary battery.

### Examples

Hereinafter, specific aspects of the present invention will be explained in more detail with reference to Examples. The present invention is not limited to the description of the following Examples.

### [Measurement method]

### <Volume-based average particle diameter (d50)>

0.01 g of a sample was suspended in 10 mL of a 0.2% by mass aqueous solution of polyoxyethylene sorbitan monolaurate which was a surfactant, and the suspension was introduced into a laser diffraction/scattering particle size distribution analyzer (model name "LA-700", manufactured by Horiba, Ltd.). After irradiating with 28 kHz ultrasonic waves at an output of 60 W for 1 minute, the volume-based median diameter in the analyzer was measured, and the volume-based median diameter was taken as the volume-average particle diameter d50.

<Mode pore diameter (PD) in a range of pore diameters of 0.01 µm or more and 1 µm or less, cumulative pore volume in a range of pore diameters of 0.01 µm or more and 1 µm or less, and total pore volume>

Using a mercury porosimeter (model name "Autopore 9520", manufactured by Micromeritics), the sample was weighed to a value of about 0.2 g, sealed in a powder cell, and degassed for 10 minutes at 25°C under vacuum (50 µmHg or less) to perform pretreatment. Next, the pressure was reduced to 4 psia (about 28 kPa) and mercury was introduced into the cell, and the pressure was increased in steps from 4 psia (about 28 kPa) to 40,000 psia (about 280 MPa), and then reduced to 25 psia (about 170 kPa). The number of steps during pressure increasing was set to 80 or more, and each step was allowed to equilibrate for 10 seconds, then the amount of mercury intrusion was measured. The pore distribution was calculated from the mercury intrusion curve thus obtained using Washburn equation. This calculation was performed assuming that the surface tension (γ) of mercury was 485 dyne/cm, and the contact angle (ψ) was 140°.

From the obtained pore distribution, the mode pore diameter (PD) in a range of pore diameters of 0.01 µm or more and 1 µm or less, the cumulative pore volume in a range of pore diameters of 0.01 µm or more and 1 µm or less, and the total pore volume were calculated.

### <Tap density>

Using a powder density measuring device (model name "Tap Denser KYT-3000", manufactured by Seishin Enterprise Co., Ltd.), a carbon material was dropped through a sieve having an opening of 300µm into a cylindrical tap cell having a diameter of 1.6cm and a volume of 20cm³ to fully fill the cell with the carbon material, and then tapping the cell 1000 times with a stroke length of 10 mm. The density value calculated from the volume at that time and mass of the sample was taken as the tap density.

### <Specific surface area (SA)>

Using a specific surface area measuring device (model name "Maxsorb HM MODEL-1210", manufactured by Mountec Co., Ltd.), a sample subjected to preliminary reduced pressure drying at 100°C for 30 minutes under a nitrogen flow, then cooled to liquid nitrogen temperature, and the specific surface area (SA) was measured using nitrogen gas by a BET one-point method.

### <Circularity>

Using ion-exchanged water as a dispersion medium and polyoxyethylene sorbitan monolaurate as a surfactant, the sample was dispersed with ultrasonic waves to obtain a dispersion. Then, the shape of the particles was photographed using a flow type image analyzer (model name "FPIA-2000", manufactured by Toa Denshi Co., Ltd.). From images of at least 1,000 particles, the circularity of particles having an equivalent circle diameter in the range of 1.5 µm to 40 µm was averaged to obtain the circularity. The circularity was calculated using the following formula (3). [circularity] = [perimeter of equivalent circle having same area as projected shape of particle]/ [actual perimeter of projected shape of particle]

### <Mass reduction rate>

Using a TG-DTA measuring device (model name "STA300", Hitachi High-Tech Science Corporation), approximately 50 mg of a carbon material composition was precisely weighed and placed in an alumina sample container, and heated from 25°C to 700°C at a heating rate of 10°C/min in a nitrogen atmosphere, and the mass reduction rate between 200°C and 700°C was calculated.

### [Production of the carbon material (A)]

Flake-like natural graphite having a d50 of 100 µm was pulverized using a dry swirling flow pulverizer to obtain flake-like natural graphite having a d50 of 10.4 µm, a tap density of 0.47 g/cm³, and a moisture content of 0.08% by mass.

To 100 g of the obtained flake-like natural graphite, 12 g of paraffin-based oil (liquid paraffin, manufactured by Wako Pure Chemical Industries, first-class, physical properties at 25°C: viscosity = 95 cP, contact angle = 13.2°, surface tension = 317 mN/m, γcosθ = 30.9) was added as a granulating agent and mixed with stirring. Then, the obtained sample was disintegrated and mixed in a hammer mill (MF10 manufactured by IKA) at a rotation speed of 3000 rpm to obtain flake-like natural graphite with the granulating agent uniformly adhered thereto.

The resulting flake-like natural graphite with the granulating agent uniformly adhered was subjected to spheroidization in which the fine powder produced during spheroidization of flake-like natural graphite was adhered to a base material and encapsulated in the spheroidized particles, using hybridization system NHS-1 manufactured by Nara Machinery Co., Ltd. for 10 minutes at a rotor speed of 85 m/sec, and then heat-treated at 400°C in an inert gas to obtain spheroidized graphite.

The resulting spheroidized graphite was filled into a rubber container, sealed, and subjected to isostatic pressure treatment, after which the resulting molded product was crushed and classified. The resulting molded product was mixed with coal tar pitch as an amorphous carbon precursor, and heat-treated at 1300°C in an inert gas. The calcined product was then crushed and classified to obtain a carbon material (A-1) having a multi-layer structure in which graphite particles and amorphous carbon were composited.

From the calcining yield, it was confirmed that the mass ratio of the spheroidized graphite particles to amorphous carbon (spheroidized graphite particles: amorphous carbon) in the obtained carbon material (A-1) having a multi-layer structure was 1:0.08. The measurement results of the physical properties of this carbon material (A-1) were as follows:
d50: 15.3 µm
PD: 0.17 µm
PD/d50: 1.11%
Cumulative pore volume from 0.01 to 1 µm: 0.03 mL/g
Total pore volume: 0.51 mL/g
Circularity: 0.93

### [Production of carbon material (B)]

As the raw material for carbon material (B), granulated spheroidized natural graphite having a specific surface area (SA) of 6.3 m²/g and d50 of 15.9 µm was used. A mixture of 100 g of this granulated spheroidized natural graphite and 200 g of a 0.15% by mass aqueous solution of polyvinyl alcohol resin was stirred in a glass container at 50°C for 1 hour using a stirring blade, and the graphite powder was filtered out by suction filtration. The graphite powder was dried at 200°C under reduced pressure for 10 hours and sieved to obtain powdered carbon material (B-1).

Furthermore, a powdered carbon material (B-2) was obtained in the same manner as the production of the carbon material (B-1), except that the concentration of the polyvinyl alcohol resin aqueous solution was changed to a 0.2% by mass aqueous solution.

Furthermore, a powdered carbon material (B-3) was obtained in the same manner as the production of the carbon material (B-1), except that the concentration of the polyvinyl alcohol resin aqueous solution was changed to a 0.25% by mass aqueous solution.

The carbon materials (B-1) to (B-3) were confirmed that the basal plane of the granulated spheroidized natural graphite was coated with a compound derived from a polyvinyl alcohol-based resin by simultaneously measuring the adsorption isotherm and heat of adsorption using toluene gas.

For comparison, raw material which was the granulated spheroidized natural graphite not coated with polyvinyl alcohol resin was used as the carbon material (b-4).

### [Example 1]

The carbon material (A-1) and the carbon material (B-1) prepared by the above mentioned methods were mixed in a mass ratio of 60:40 to prepare the carbon material composition of Example 1.

### [Example 2]

The carbon material (A-1) and the carbon material (B-2) prepared by the above mentioned methods were mixed in a mass ratio of 60:40 to prepare the carbon material composition of Example 2.

### [Example 3]

The carbon material (A-1) and the carbon material (B-3) prepared by the above mentioned methods were mixed in a mass ratio of 60:40 to prepare the carbon material composition of Example 3.

### [Comparative Example 1]

The carbon material of Comparative Example 1 was prepared using only the carbon material (A-1) prepared by the above mentioned method and not including the carbon material (B).

### [Comparative Example 2]

The carbon material (A-1) prepared by the above mentioned method and the carbon material (b-4) not coated with an organic compound were mixed in a mass ratio of 60:40 to prepare the carbon material composition of Comparative Example 2.

### [Comparative Example 3]

The carbon material of Comparative Example 3 was prepared using only the carbon material (B-1) prepared by the above mentioned method and not including the carbon material (A).

### [Comparative Example 4]

The carbon material of Comparative Example 4 was prepared using only the carbon material (B-3) prepared by the above mentioned method and not including the carbon material (A).

The mass reduction rate was measured for the carbon material compositions or carbon materials prepared in each Example and Comparative Example. The results are shown in Table 1 below.

**[Table 1]**

| | Carbon material (A) | | Carbon material (B) | | Mass Reduction Rate [% by mass] |
|---|---|---|---|---|---|
| | Type | Content [% by mass] | Type | Content [% by mass] | |
| Example 1 | (A-1) | 60 | (B-1) | 40 | 0. 10 |
| Example2 | (A-1) | 60 | (B-2) | 40 | 0. 11 |
| Example3 | (A-1) | 60 | (B-3) | 40 | 0. 14 |
| Comparative Example 1 | (A-1) | 100 | - | - | 0. 00 |
| Comparative Example2 | (A-1) | 60 | (b-4) | 40 | 0. 00 |
| Comparative Example3 | - | - | (B-1) | 100 | 0. 24 |
| Comparative Example4 | - | - | (B-3) | 100 | 0. 36 |

### [Evaluation of battery performance]

Using the carbon material compositions or carbon materials of Examples 1 to 3 and Comparative Examples 1 to 4 as negative electrode materials, negative electrode sheets and secondary batteries were prepared by the following method, and the following evaluations were performed. The evaluation results are shown in Table 2.

### <Preparation of negative electrode sheet>

Using the carbon material compositions or carbon materials of the above Examples or Comparative Examples as negative electrode materials, electrode plates having active material layers having an active material layer density of 1.60±0.03 g/cm³ were prepared.

Specifically, 20.00±0.02 g of the negative electrode material, 20.00±0.02 g (0.200 g in terms of solids) of a 1% by mass aqueous solution of sodium carboxymethylcellulose (MAC500LC, manufactured by Nippon Paper Industries Co., Ltd.), and 0.42±0.02 g (0.2 g in terms of solids) of styrene-butadiene rubber aqueous dispersion (TRD102A, manufactured by JSR Corporation) were stirred for 5 minutes in a vacuum mixer: Awatori Rentaro ARE-310 manufactured by Thinky Corporation and degassed for 30 seconds to obtain a slurry.

This slurry was applied to a width of 10 cm on a copper foil having a thickness of 10 µm as a current collector using a die coater so that the amount of the negative electrode material adhered was 10.00±0.3 mg/cm². Then, the adhered layer was roll-pressed using a roller having a diameter of 20 cm to compress the adhered layer so that the density of the active material layer was adjusted to 1.60±0.03 g/cm³ to obtain a negative electrode sheet.

### <Evaluation of pressing pressure>

The pressing pressure required to set the active material layer density to 1.6 g/cm³ was measured for the negative electrode sheets of the Examples and Comparative Examples.

### <Evaluation of liquid immersion property>

The liquid immersion property was evaluated for the negative electrode sheets of Examples and Comparative Examples as follows.

Approximately 1 µL of propylene carbonate was dropped onto the negative electrode sheet, and the time until 0.6 µL of the drop was absorbed by the negative electrode sheet was defined as the liquid immersion property (seconds).

### <Preparation of non-aqueous secondary battery>

The negative electrode sheet prepared by the above mentioned method was cut into a 32 mm x 42 mm square and dried under reduced pressure at 190°C to prepare a negative electrode.

10 parts by mass of carbon black, 41.7 parts by mass of an N-methylpyrrolidone solution containing 12% by mass of polyvinylidene fluoride, and an appropriate amount of N-methylpyrrolidone were added to 85 parts by mass of lithium nickel manganese cobalt-based composite oxide powder and kneaded to form a slurry. This slurry was applied to an aluminum foil by a doctor blade method to a basis weight of 22.8 mg/cm². It was then compressed using a roll press so that the density of the positive electrode became 2.45 g/cm³. This positive electrode sheet was cut into a 30 mm x 40 mm square and dried at 140°C to obtain a positive electrode.

The negative electrode and the positive electrode were stacked with a separator impregnated with an electrolyte solution interposed therebetween, and sealed in an aluminum laminate bag to prepare a battery for charge/discharge tests. The electrolyte solution used was a mixture of ethylene carbonate and ethyl methyl carbonate in a mixing ratio of 30: 70 (volume ratio of ethylene carbonate: ethyl methyl carbonate) to which 2% by mass of vinylene carbonate was added, and LiPF₆ was dissolved to a concentration of 1 mod/L.

### <Evaluation of initial efficiency>

The above batteries were first charged at 0.2C to 4.1V, further charged to 0.1mA at 4.1V, then discharged at 0.2C to 3.0V, then charged at 0.2C to 4.2V, further charged to 0.1mA at 4.2V, then discharged at 0.2C to 3.0V. The initial adjustment was performed by repeating the 4.2V charge and 0.2C discharge once more. The ratio of the 0.2C discharge capacity to the initial 4.1V charge capacity was taken as the initial efficiency.

### <Evaluation of rapid discharge characteristics>

The batteries after the initial adjustment were charged at 0.2C to 4.2V, further charged at 4.2V for 2 hours, and then discharge tests were carried out at 0.2C and 3C down to 3.0V, respectively. The ratio of the 3C discharge capacity to the 0.2C discharge capacity was defined as the 3C/0.2C discharge rate.

### <Evaluation of remaining capacity retention rate>

The batteries after initial adjustment were charged to 80% of the charge capacity and stored at 60°C for 4 weeks, and a discharge test was carried out at 25°C after the storage at 0.2C down to 3.0V. The ratio of the 0.2C discharge capacity after 4 weeks of storage at 60°C to the 0.2C discharge capacity at the end of initial adjustment was defined as the remaining capacity retention rate.

**[Table 2]**

| | Pressing Pressure [kgf/cm] | Liquid Immersion Property [Seconds] | Initial Efficiency [%] | 3C/0.2C Discharge Rate [%] | Remaining Capacity Retention Rate [%] |
|---|---|---|---|---|---|
| Example 1 | 87 | 31 | 87. 7 | 80. 6 | 73. 0 |
| Example 2 | 83 | 32 | 87. 5 | 80. 0 | 73. 2 |
| Example3 | 85 | 29 | 87. 6 | 79. 5 | 72. 9 |
| Comparative Example 1 | 216 | 17 | 87. 0 | 75. 6 | 70. 0 |
| Comparative Example2 | 61 | 40 | 87. 0 | 79. 4 | 72. 7 |
| Comparative Example3 | 34 | 150 | 86. 8 | | 65. 9 |
| Comparative Example4 | 45 | 93 | 86. 9 | | 66. 0 |

As shown from Table 2, Comparative Example 1, which contained only the carbon material (A), had high hardness and was difficult to press and compact the negative electrode plate, and was inferior in the initial efficiency, rate characteristics, and remaining capacity retention rate after high-temperature storage. Comparative Example 2, in which the carbon material (A) was blended with the carbon material (b) not coated with an organic compound, had poor liquid immersion property and was inferior in the initial efficiency, rate characteristics, and remaining capacity retention rate after high-temperature storage. Comparative Examples 3 to 4, which contained only the carbon material (B), had poor liquid immersion property and were inferior in the initial efficiency and remaining capacity retention rate after high-temperature storage.

In Examples 1 to 3 using the carbon material composition of the present invention, the press compaction property and the liquid immersion property of the electrode plate were well balanced. In addition, since it was considered that the active fracture surface of graphite generated when the carbon material was crushed was not observed, the side reaction with the electrolyte was suppressed, and the initial efficiency, rate characteristics, and remaining capacity retention rate after high-temperature storage were all excellent.

Although the present invention has been described in detail using specific embodiments, it will be apparent to those skilled in the art that various changes can be made without departing from the spirit and scope of the present invention.

This application is based on Japanese Patent Application No. 2022-058822 filed on March 31 2022, and the entire of which is incorporated herein by reference.

## Claims

1. A carbon material composition comprising a carbon material (A) and a carbon material (B),
wherein the carbon material (A) has a cumulative pore volume of 0.02 mL/g or more in a range of pore diameters of 0.01 µm or more and 1 µm or less, and a ratio of a pore diameter to a volume-based average particle diameter (PD/d50 (%)) expressed by the following formula (1) of 1.8 or less, and
the carbon material (B) is an organic compound-coated carbon material. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100

2. The carbon material composition according to claim 1, wherein the circularity of the carbon material (A) measured by a flow type particle image analysis is 0.88 or more.

3. The carbon material composition according to claim 1 or 2, wherein the carbon material (A) is derived from natural graphite.

4. The carbon material composition according to any one of claims 1 to 3, wherein the carbon material (A) is a composite carbon material of spheroidized graphite and a carbonaceous material.

5. The carbon material composition according to any one of claims 1 to 4, wherein the carbon material (B) is derived from natural graphite.

6. The carbon material composition according to any one of claims 1 to 5, wherein a basal plane of the carbon material (B) is coated with the organic compound.

7. The carbon material composition according to any one of claims 1 to 6, wherein the organic compound is a compound derived from a polyvinyl alcohol resin.

8. The carbon material composition according to any one of claims 1 to 7, wherein the carbon material composition contains 20% by mass to 80% by mass of the carbon material (A) and 20% by mass to 80% by mass of the carbon material (B) based on a total of 100% by mass of the carbon material (A) and the carbon material (B).

9. The carbon material composition according to any one of claims 1 to 8, having a mass reduction rate of 0.04% by mass to 0.48% by mass from 200°C to 700°C measured by TG-DTA.

10. A method for producing a carbon material composition comprising a step of mixing a carbon material (A) and a carbon material (B),
wherein the carbon material (A) has a cumulative pore volume of 0.02 mL/g or more in a range of pore diameters of 0.01 µm or more and 1 µm or less, and a ratio of a pore diameter to a volume-based average particle diameter (PD/d50 (%)) expressed by the following formula (1) of 1.8 or less, and
the carbon material (B) is an organic compound-coated carbon material. PD/d50 (%) = ([mode pore diameter (PD) in a range of pore diameters of 0.01 µm or more and 1 µm or less in a pore distribution obtained by a mercury intrusion porosimetry]/[volume-based average particle diameter (d50)]) × 100

11. A negative electrode comprising a current collector and an active material layer formed on the current collector, wherein the active material layer comprises the carbon material composition according to any one of claims 1 to 9.

12. A secondary battery comprising a positive electrode, a negative electrode, and an electrolyte, wherein the negative electrode is the negative electrode according to claim 11.
